# EUROPEAN PATENT APPLICATION

(11) **EP 4 561 165 A1**
(43) Date of publication of application: **28.05.2025**
(21) Application number: 23851521.7
(22) Date of filing: 10.07.2023
(51) Int. Cl.: H04W 28/20, H04L 5/00

(54) **SLOT ADJUSTMENT METHOD, COMMUNICATION DEVICE AND STORAGE MEDIUM**

(30) Priority: 12.08.2022 CN 202210968679
(71) Applicant: ZTE Corporation, Shenzhen, Guangdong 518057 (CN)
(72) Inventor: LIU, Feng, Shenzhen, Guangdong 518057 (CN)
(74) Representative: Carangelo, Pierluigi
(86) International application number: PCT/CN2023/106651
(87) International publication number: WO 2024/032296

(57) **Abstract**

Provided in the embodiments of the present application are a slot adjustment method, a communication device and a medium. The slot adjustment method comprises: a source node (610) sending slot adjustment policy information to a sink node (640) by means of downstream nodes (620, 630), such that the downstream nodes (620, 630) and the sink node (640) determine a corresponding slot adjustment policy according to the slot adjustment policy information, and the source node (610) receiving slot adjustment policy acknowledgment information, which is returned by the sink node (640) by means of the downstream nodes (620, 630), and then sending slot adjustment indication information to the sink node (640) by means of the downstream nodes (620, 630), so as to complete slot adjustment by using the corresponding slot adjustment policy.

## Description

### CROSS-REFERENCE TO RELATED APPLICATION

This application is filed on the basis of the Chinese patent application No. 202210968679.8 filed August 12, 2022, and claims priority of the Chinese patent application, the entire contents of which are incorporated herein by reference.

### TECHNICAL FIELD

The present disclosure relates to the field of telecommunication, in particular to a method for time slot adjustment, a communication apparatus, and a computer-readable storage medium.

### BACKGROUND

In telecommunication networks, a frame is typically employed to carry clients' services. A carrier frame is divided into several time slots for carrying services. In practical service applications, with the increase or decrease of client's service/traffic demands, the number of carrier time slots needs to be adjusted accordingly.

In the related technology, time slot negotiation and adjustment are carried out by hop-by-hop negotiation and hop-by-hop adjustment. In other words, each of the nodes between end-to-end performs the time slot negotiation and time slot adjustment one by one in turn. In this negotiation and adjustment process, if the negotiation between certain nodes fails, some nodes may adopt the time slot carrier scheme after negotiation for transmission, while some other nodes adopt the time slot carrier scheme before the negotiation for transmission, resulting in inconsistent end-to-end carrier bandwidth. Even if a fall back mechanism is employed for reverse adjustment, it will increase the difficulty of negotiation and reduce the success rate of time slot adjustment. Therefore, it is important to improve the efficiency of negotiation of end-to-end slot and the success rate of time slot adjustment.

### SUMMARY

Provided are a method for time slot adjustment, a communication apparatus, and a computer-readable storage medium in various embodiments of the present disclosure.

According to a first aspect of the present disclosure, a method for time slot adjustment is provided, which includes: sending time slot adjustment policy information to a destination node through a downstream node, to allow each of the downstream node and the destination node to determine respective time slot adjustment policy according to the time slot adjustment policy information; and sending the time slot adjustment indication information to the destination node through the downstream node, in response to receiving the time slot adjustment policy acknowledgment information returned by the destination node through the downstream node, and completing the time slot adjustment by adopting the respective time slot adjustment policy.

According to a second aspect of the present disclosure, a method for time slot adjustment is provided, which includes: receiving time slot adjustment policy information sent by an upstream node; determining a corresponding time slot adjustment policy according to the time slot adjustment policy information; sending the time slot adjustment policy information to a downstream node, to instruct the downstream node to determine a respective time slot adjustment policy according to the time slot adjustment policy information; forwarding the time slot adjustment policy acknowledgment information to the upstream node, in response to receiving time slot adjustment policy acknowledgment information returned by the downstream node; and forwarding the time slot adjustment indication information to the downstream node, in response to receiving the time slot adjustment indication information sent by the upstream node, and completing the time slot adjustment by adopting the respective time slot adjustment policy.

According to a third aspect of the present disclosure, a method for time slot adjustment is provided, which includes: receiving time slot adjustment policy information sent by a sourcenode through an upstream node; determining a corresponding time slot adjustment policy according to the time slot adjustment policy information; sending time slot adjustment policy acknowledgment information to the source node through the upstream node according to the time slot adjustment policy information; and completing the time slot adjustment by adopting the respective time slot adjustment policy, in response to receiving time slot adjustment indication information sent by the source node through the upstream node.

According to a fourth aspect of the present disclosure, a communication apparatus is provided. The apparatus includes at least one processor, and a storage device storing at least one program thereon, which when executed by the processor, causes the processor to carry out any one of the methods as described above.

According to fifth aspect of the present disclosure, a computer-readable storage medium is provided. The computer-readable storage medium stores a computer program which, when executed by a processor, causes the processor to carry out any one of the methods as described above.

### BRIEF DESCRIPTION OF DRAWINGS

FIG. 1 depicts a schematic diagram showing the transmission of a service carrying frame/carrier frame between nodes in the related technology;
FIG. 2 depicts a schematic diagram showing a frame in the related technology;
FIG. 3 depicts a flow chart showing time slot negotiation and adjustment for reducing time slot in the related technology;
FIG. 4 depicts a flow chart showing time slot negotiation and adjustment for increasing time slot in the related technology;
FIG. 5 depicts a flow chart showing a time slot adjustment process according to an embodiment of the present disclosure;
FIG. 6 depicts a schematic diagram showing a time slot adjustment process according to an embodiment of the present disclosure;
FIG. 7 depicts a schematic diagram showing a time slot adjustment process according to another embodiment of the present disclosure;
FIG. 8 depicts a schematic diagram showing encapsulation of the content of the time slot adjustment policy by means of Ethernet packet format according to an embodiment of the present disclosure;
FIG. 9 depicts a schematic diagram showing transmission of an adjustment policy packet to other nodes from a source node according to an embodiment of the present disclosure;
FIG. 10 depicts a schematic diagram showing a frame according to an embodiment of the present disclosure;
FIG. 11 depicts a schematic diagram showing a time slot adjustment process according to another embodiment of the present disclosure;
FIG. 12 depicts a schematic diagram showing transmission of an adjustment policy packet through a network management center according to an embodiment of the present disclosure;
FIG. 13 depicts a flowchart showing a method for time slot adjustment according to an embodiment of the present disclosure;
FIG. 14 depicts a schematic diagram showing a packet encapsulating the content of a slot adjustment policy according to an embodiment of the present disclosure;
FIG. 15 depicts a schematic diagram showing a time slot adjustment process according to another embodiment of the present disclosure;
FIG. 16 depicts a schematic diagram showing a carrier frame according to another embodiment of the present disclosure; and
FIG. 17 depicts a schematic diagram showing a communication apparatus according to an embodiment of the present disclosure.

### DETAILED DESCRIPTION

The purpose, technical scheme and advantages of the present disclosure will become apparent through the following description for various embodiments in conjunction with the drawings. It should be understood that the embodiments described here are intended for illustration but not limitation of the present disclosure.

It should be noted that although the devices are shown with individual functional modules in the schematic diagram and the logical sequences are shown in the flow chart, in some cases, the devices can have different modules than those shown and the operations can be executed in a different order than those shown. It should be noted that the terms "first" and "second", if used in the description, the claims and the drawings are intended to distinguish similar objects, and do not necessarily imply any specific order or sequence.

In the embodiments of the present disclosure, the terms "further", "exemplary" or "optional" are used as examples, illustrations or explanations, and should not be interpreted as being more preferred or advantageous than other embodiments or designs. The use of words such as "further", "exemplary" or "optional" is intended to present related concepts.

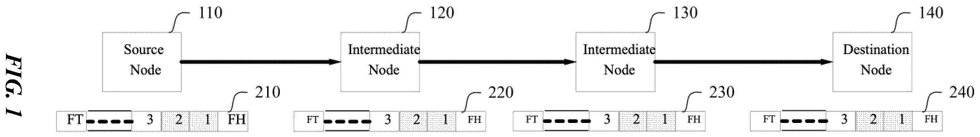

In telecommunication networks, the frame is typically employed to carry client services. A carrier frame is divided into several time slots for carrying services. When dividing time slots, time slots can be divided in a carrier frame, or time slots can be divided across multiple carrier frames. FIG. 1 depicts a schematic diagram showing the transmission of a service carrying frame/carrier frame between nodes in the related art. As shown in FIG. 1, nodes 110-140 are nodes that support client services carried within time slots. Node 110 is a source node, node 140 is a destination node, and nodes 120-130 are intermediate nodes. The nodes can be various carrier nodes such as nodes supporting international standard protocols, and nodes supporting slicing packet networks defined by related art. The carrier frames 210-240 each includes a frame header (FH), a container and a frame trailer (FT). The container of the carrier frame contains several time slots, and the positions of the time slots are fixed, which are transmitted in the network along with the carrier frame. Each client service can be carried in fixed time slot(s), and different client services are carried in different time slots that have different positions. When the client bandwidth is large, multiple time slot positions are selected to carry the load, and when the client bandwidth is small, a few time slot positions are selected to carry the load. When carrying the client service, source node 110 maps the client service to the corresponding time slots in the carrier frame and sends them out, intermediate nodes 120-130 complete the time slot forwarding, and destination node 140 extracts the client service from the corresponding time slot to recover the original client service.

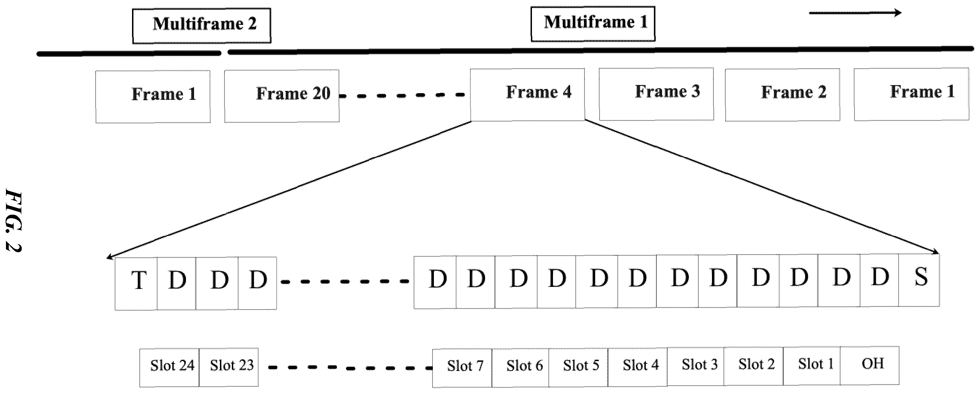

FIG. 2 depicts a schematic diagram showing a frame in the related technology. As shown in the figure, the carrier frame generally has a fixed frame structure. According to the frame structure in the standard file "Fine granularity slicing technical specification for Slicing Packet Network (SPN)", a carrier frame consists of one S-code block, 195 D-code blocks and one T-code block. S-code block, D-code block and T-code block are 66-bit code block formats defined by the 802.3 standard specification. Besides S-code block, D-code block and T-code block, O-code block and IDLE code block are also defined in the standard. One D-code block in the carrier frame is divided into an overhead (OH) byte and 24 time slots. Every 20 frames form a multiframe, so there are 480 time slots in a multiframe cycle. The overhead (OH) bytes in the carrier frame generally include the following information: Multi-frame indicator (MFI), General Communication Channel information (GCC), time slot serial number information (Slot num), time slot Configuration Request indication information (Configuration Request, CR), time slot Configuration Acknowledge (CA), time slot Configuration come into force (C), and time slot increase adjustment notification (Send notice, S).

In practical service applications, the client bandwidth is small at the beginning, and the bandwidth of the required carrier pipeline is small, and only a few carrier slots are needed to meet the client's demand. After a period of time, with the increase of client traffic and bandwidth, more time slots are needed to carry client traffic, so it is necessary to increase the number of time slots without affecting or interrupting client traffic and complete the operation of increasing time slots. On the other hand, for clients with declining service traffic, after a period of time, the bandwidth of the client's services decreases, and it is necessary to reduce the number of time slots carrying services. Therefore, it is necessary to dynamically adjust the number of time slots carrying client services without affecting client services.

In the related technology, hop-by-hop negotiation and hop-by-hop adjustment mechanism are adopted. The adjustment process starts the handshake and negotiation process of time slot adjustment at first: one node sends a time slot adjustment application signal, and another node sends back a time slot adjustment acknowledgment confirmation signal after receiving the time slot adjustment application signal. The node that sent the time slot adjustment application signal receives the time slot adjustment acknowledgment confirmation signal to complete the negotiation process between the two nodes, and can start the time slot number adjustment process.

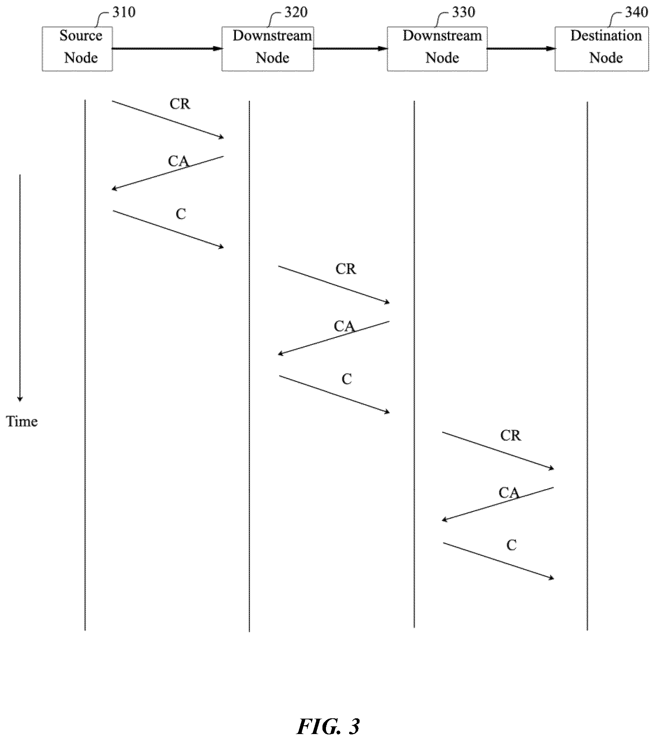

FIG. 3 depicts a flow chart showing time slot negotiation and adjustment for reducing time slot in the related technology. As shown in FIG. 3, when it is necessary to reduce the number of the time slots, the source node 310 sends a Configuration Request (CR) signal to the downstream node 320, along with the slot serial number(s) for reduction, to notify the downstream node 320 with the slot serial number(s) for reduction. After receiving the CR signal, the downstream node 320 sends a Configuration Acknowledge (CA) signal to the source node 310 after completing the preparation. Once the source node 310 receives the CA signal from the downstream node 320, the negotiation of time slot reduction between the source node 310 and the downstream node 320 completes. The source node 310 sends a Configuration come into force (signal "C") to the downstream node 320. Then the source node 310 and the downstream node 320 carry the client service according to the reduced time slots and adjusted slot positions. When receiving the Configuration come into force, signal "C" from the source node 310, the downstream node 320 starts to send the CR signal to its downstream node 330, along with the slot serial number(s) for reduction. After receiving CR signal, the downstream node 330 sends a CA signal to the downstream node 320 after completing the preparation. After the downstream node 320 receives the CA signal from the downstream node 330, the negotiation of time slot reduction between the downstream node 320 and the downstream node 330 completes. After receiving the CA signal from the downstream node 330, the downstream node 320 sends a Configuration come into force, signal "C" to the downstream node 330. Then the downstream node 320 and the downstream node 330 carry the client service according to the reduced time slots and adjusted slot positions. The above process continues, until downstream node 330 and destination node 340 also complete the negotiation of time slot reduction and the time slot reduction adjustment process, so as to complete all the time slot adjustment processes. The negotiation and adjustment in the above adjustment process is completed segment by segment with each segment involving two adjacent nodes. Therefore, during the adjustment process, some nodes have completed the adjustment and carried services according to the adjusted number of time slots, while some other nodes have not completed the adjustment and carried services according to the number of time slots before the adjustment. At the same time, in the process of time slot reduction and adjustment, the number of time slots between upstream adjacent nodes is reduced first, and the time slot reduction operation of downstream nodes is started only after the time slot number of upstream adjacent nodes is reduced, and the time slot number between upstream nodes is always kept less than that between downstream nodes. In other words, the service bandwidth between upstream nodes is less than that between downstream nodes, thus avoiding the occurrence of service overflow at some node positions due to the fact that the upstream service bandwidth in the pipeline is greater than the downstream service bandwidth. Therefore, in the adjustment process, the end-to-end bandwidth reduction adjustment of the service is completed only after the nodes of the last two nodes complete the time slot reduction adjustment.

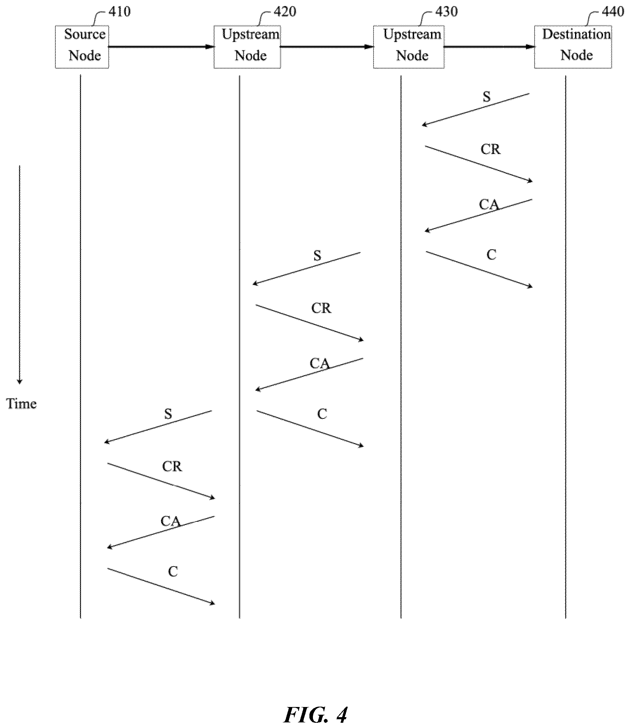

FIG. 4 depicts a flow chart showing time slot negotiation and adjustment for increasing time slot in the related technology. As shown in FIG. 4, when it is desired to increase time slots, in order to ensure that the service bandwidth between upstream nodes is smaller than that between downstream nodes, it is specified in the related art that during time slot increase, the destination node 440 starts the time slot increase adjustment, and sends the time slot increase adjustment notification ("S signal") to the upstream node 430. After receiving the "S signal", the upstream node 430 starts the increase adjustment, and sends a CR signal to the destination node 440, along with the increased time slot serial number. After receiving the CR signal, the destination node 440 returns a CA signal to the upstream node 430 after completing the preparation. After receiving the CA signal from the destination node 440, the negotiation of time slot increase and adjustment between the upstream node 430 and the destination node 440 completes. The upstream node 430 sends a signal C to the destination node 440. Then the upstream node 430 and the destination node 440 carry the client service according to the increased time slots and adjusted slot positions. At the same time, the upstream node 430 sends a signal S to the upstream node 420. After receiving the S signal, the upstream node 420 starts a negotiation for time slot increase, sends a CR signal to the upstream node 430, along with the time slot serial number(s) of the increased time slot(s). After receiving the CR signal, the upstream node 430 returns a CA signal to the upstream node 420 after completing the preparation. Once upstream node 420 receives the CA signal from upstream node 430, the negotiation of time slot increase between upstream node 420 and upstream node 430 completes. Upstream node 420 then sends a signal C to upstream node 430. Then upstream node 420 and upstream node 430 carry the client service according to the increased time slots and adjusted slot positions. At the same time, upstream node 420 sends a signal S to the source node 410. The above process continues, after source node 410 and upstream node 420 complete the negotiation of time slot increase and the time slot increase adjustment process, all the time slot increase adjustment processes are completed. The adjustment process is completed by negotiation and execution successively, segment by segment. In the adjustment process of increasing time slots, the number of time slots is always increased between downstream nodes first, and then between upstream nodes, and the number of time slots between upstream nodes is always kept less than that between downstream nodes. That is, the service bandwidth between upstream nodes is less than that between downstream nodes, so as to avoid service overflow caused by the fact that the upstream service bandwidth is greater than the downstream service bandwidth in the pipeline. In the time slot increase adjustment process, the end-to-end bandwidth increase adjustment of the service is completed only after the nodes of the last two nodes complete the time slot increase adjustment.

As can be seen from the time slot negotiation and adjustment process corresponding to FIG. 3 and FIG. 4, the bandwidth adjustment process in the related technology is completed by negotiation and execution successively, segment by segment. The adjustment for a subsequent segment can be started only after adjustment of a previous segment is completed, which takes a lot of time. At the same time, segment-by-segment negotiation and segment-by-segment adjustment bring a disadvantage. Some nodes have already completed the adjustment, while some nodes encounter unexpected situations during the adjustment process. For example, in some cases, CR signals and CA signals are lost due to interference during the adjustment process. Alternatively, in some cases, a node fails to send the acknowledgement CA signal in time when it encounters failures, which leads to the failure of negotiation between upstream and downstream nodes. Under the above circumstances, when the negotiation of time slot adjustment between some nodes fails, the subsequent time slot adjustment cannot be carried out. As such, some nodes with successful adjustment carry services according to the new time slot number, while some other nodes carry services according to the old time slot number, resulting in inconsistent end-to-end carrier bandwidth of services. In the case that the negotiation between some of the above nodes fails and the time slot adjustment of the subsequent nodes fails, generally, a fallback mechanism should be started. According to the time slot adjustment process, the nodes that have been successfully adjusted will be returned to the original unadjusted time slot state by adopting the method of adjusting the time slots with the opposite number. For example, if the adjustment for some nodes is successful and the adjustment for some other nodes fails in the time slot increase adjustment, the time slot decrease adjustment will be started for the nodes whose adjustment is successful, and the increased time slot will be deleted according to the time slot decrease mechanism, thus completing the time slot fallback. Similarly, if the adjustment for some nodes is successful and the adjustment for some other nodes fails in the time slot decrease/reduction adjustment, time slot increase adjustment will be started for the nodes whose adjustment is successful, and the decreased time slot will be added according to the time slot increase mechanism, thus completing the time slot fallback. However, the time slot fallback process is also very complicated. Sometimes, in the fallback process, the fallback adjustment may fail again, and the fallback cannot be continued, resulting in the dilemma that neither the end-to-end time slot adjustment nor the end-to-end time slot fallback can be completed. At the same time, in the networking of different manufacturers, because of the different internal processing mechanisms of different manufacturers, it is more likely that the time slot negotiation and adjustment will fail, which leads to the difficulty in the application of time slot adjustment.

In view of this, a method for time slot adjustment, a communication apparatus, and a computer-readable storage medium are provided in various embodiments of the present disclosure. In the method for time slot adjustment, a source node sends time slot adjustment policy information to a destination node via a downstream node, such that the downstream node and the destination node determine the respective time slot adjustment policy according to the time slot adjustment policy information. After receiving the time slot adjustment policy acknowledgement information returned by the destination node via the downstream node, the source node adopts the corresponding time slot adjustment policy to carry the service package, and at the same time sends the time slot adjustment indication information to the destination node via the downstream node, such that each of the downstream node and the destination node adopts the respective time slot adjustment policy to complete the time slot adjustment according to the time slot adjustment indication information. As such, after the end to end handshake and negotiation of all nodes on the time slot adjustment is successful, the time slot adjustment is performed sequentially starting from the source node, which can not only reduce the negotiation time, but also avoid the fallback requirement caused by the negotiation failure in the hop-by-hop adjustment scheme, thereby improving the time slot negotiation efficiency and the time slot adjustment success rate.

The method for time slot adjustment according to various embodiments of the present disclosure can be applied in the application environment of carrying client services based on the time slot method shown in FIG. 1.

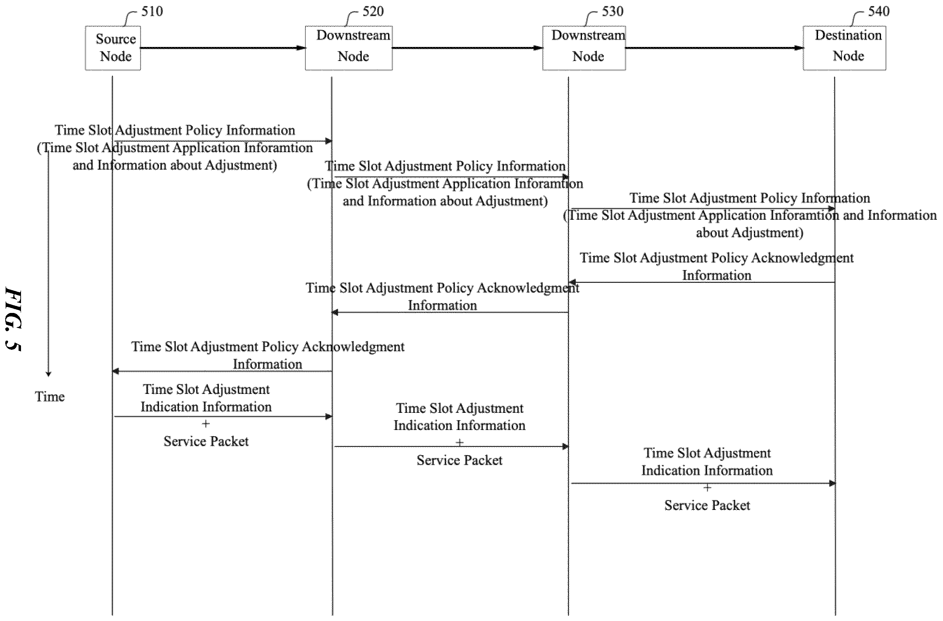

FIG. 5 depicts a schematic diagram showing a time slot adjustment process according to an embodiment of the present disclosure. Four network nodes, i.e., a source node 510, a downstream node 520, a downstream node 530 and a destination node 540 are shown in the figure. In the application of service carrying, the service starts from the source node 510 through the intermediate downstream node 520 and downstream node 530, and ends at the destination node 540. It can be understood that in the actual application scenario, more intermediate nodes may be provided between the source node and the destination node, while embodiments of the present disclosure are illustrated with two intermediate nodes by way of an example.

In the time slot adjustment process according to this embodiment, the source node 510 initially sends time slot adjustment policy information to the destination node 540 through the downstream nodes 520 and 530, such that the downstream nodes 520, 530 and the destination node 540 determine corresponding time slot adjustment policies according to the time slot adjustment policy information. The time slot adjustment policy information includes time slot adjustment application information and information about adjustment. The time slot adjustment application information is intended to request time slot adjustment, and the information about adjustment is intended to determine the policy content of the time slot adjustment policy. After receiving the time slot adjustment application information, destination node 540 sends time slot adjustment policy acknowledgment information to the source node 510. After receiving the time slot adjustment policy acknowledgment information returned by the destination node 540 through the downstream node 530 and the downstream node 520, the source node 510 completes the time slot adjustment by adopting the corresponding time slot adjustment policy, and sends the time slot adjustment indication information to the destination node 540 through the downstream node 520 and the downstream node 530. As such, downstream node 520, downstream node 530 and destination node 540 complete the time slot adjustment by adopting the corresponding time slot adjustment policy according to the time slot adjustment indication information. In an embodiment, in the process of time slot negotiation, the time slot adjustment policy information includes the time slot adjustment application information, and the time slot serial number related to adjustment as the information about adjustment. The time slot adjustment application information is the time slot adjustment application signal CR. Since the information about adjustment indicates each time slot serial number of the respective time slot for adjustment, the time slot adjustment policy determined by another nodes except the source node according to the time slot adjustment policy information indicates the adjustment policy corresponding to the time slot serial number(s). The time slot adjustment policy acknowledgment information sent by the destination node includes time slot adjustment acknowledgment information, and time slot serial number as adjustment information for confirmation. The time slot adjustment acknowledgment information is the time slot adjustment acknowledgment signal CA, which is the acknowledgment information corresponding to the time slot adjustment application information. The negotiation of the time slot adjustment between two adjacent nodes would not complete unless the time slot serial number(s) of the time slot(s) related to adjustment transmitted between the two adjacent nodes matches the time slot serial number(s) for confirmation transmitted between the two adjacent nodes, and similar process proceeds to the subsequent nodes. End-to-end time slot negotiation is not completed until the source node receives the time slot serial number for confirmation that matches the time slot serial number(s) of the time slot(s) for adjustment sent by itself. The time slot adjustment process is performed once the end-to-end time slot negotiation is completed. In the process of time slot adjustment, the time slot adjustment indication information is carried in the time slot adjustment indication signal C. In this embodiment, since the time slot adjustment indication information does not additionally carry the time slot serial number(s) of the time slot(s) for adjustment, after receiving the time slot adjustment indication signal, each node adjusts the time slot according to the time slot adjustment policy determined in the previous time slot adjustment negotiation by default.

In an embodiment, in the process of time slot negotiation, the time slot adjustment policy information includes the time slot adjustment application information, and the time slot serial number related to adjustment as the information about adjustment. The time slot adjustment application information is the time slot adjustment application signal CR. Since the information about adjustment indicates each time slot serial number of the respective time slot for adjustment, the time slot adjustment policy determined by another nodes except the source node according to the time slot adjustment policy information indicates the adjustment policy corresponding to the time slot serial number(s). The time slot adjustment policy acknowledgment information sent by the destination node includes time slot adjustment acknowledgment information, and time slot serial number as adjustment information for confirmation. The time slot adjustment acknowledgment information is the time slot adjustment acknowledgment signal CA, which is the acknowledgment information corresponding to the time slot adjustment application information. The negotiation of the time slot adjustment between two adjacent nodes would not complete unless the time slot serial number(s) of the time slot(s) to be adjusted transmitted between the two adjacent nodes matches the time slot serial number(s) for confirmation transmitted between the two adjacent nodes, and similar process proceeds to the subsequent nodes. End-to-end time slot negotiation is not completed until the source node receives the time slot serial number for confirmation that matches the time slot serial number(s) of the time slot(s) for adjustment sent by itself. The time slot adjustment process is performed once the end-to-end time slot negotiation is completed. In the process of time slot adjustment, the time slot adjustment indication information is carried in the time slot adjustment indication signal C, which is intended to indicate enabling the time slot adjustment policy. The source node sends the time slot serial number(s) of the time slot(s) for adjustment along with the time slot adjustment indication signal C. Since the time slot adjustment indication information includes the time slot serial number(s) of the time slot(s) for adjustment, each node adjusts the time slot(s) according to time slot serial number(s) of the time slot(s) for adjustment after receiving the time slot adjustment indication signal.

In an embodiment, in the process of time slot negotiation, the time slot adjustment policy information includes the time slot adjustment application information, and the policy serial number related to adjustment as the information about adjustment. The time slot adjustment application information is the time slot adjustment application signal CR. Since the information about adjustment indicates each policy serial number related to adjustment, the time slot adjustment policy determined by another nodes except the source node according to the time slot adjustment policy information indicates the adjustment policy corresponding to the policy serial number(s). The time slot adjustment policy acknowledgment information sent by the destination node includes time slot adjustment acknowledgment information, and policy serial number as adjustment information for confirmation. The time slot adjustment acknowledgment information is the time slot adjustment acknowledgment signal CA, which is the acknowledgment information corresponding to the time slot adjustment application information. The negotiation of the time slot adjustment between two adjacent nodes would not complete unless the policy serial number related to adjustment transmitted between the two adjacent nodes matches the policy serial number(s) for confirmation transmitted between the two adjacent nodes, and similar process proceeds to the subsequent nodes. End-to-end time slot negotiation is not completed until the source node receives the policy serial number for confirmation that matches the policy serial number related to adjustment sent by itself. The time slot adjustment process is performed once the end-to-end time slot negotiation is completed. In the process of time slot adjustment, the time slot adjustment indication information is carried in the time slot adjustment indication signal C, which is intended to indicate enabling the time slot adjustment policy. In this embodiment, since the time slot adjustment indication information does not additionally carry the serial number of the policy for execution in the adjustment, after receiving the time slot adjustment indication signal, each node performs time slot adjustment according to the time slot adjustment policy determined in the previous negotiation of time slot adjustment by default.

In an embodiment, in the process of time slot negotiation, the time slot adjustment policy information includes the time slot adjustment application information, and the policy serial number related to adjustment as the information about adjustment. The time slot adjustment application information is the time slot adjustment application signal CR. Since the information about adjustment indicates each policy serial number related to adjustment, the slot adjustment policy determined by another nodes except the source node according to the slot adjustment policy information indicates the adjustment policy corresponding to the policy serial number(s). The time slot adjustment policy acknowledgment information sent by the destination node includes time slot adjustment acknowledgment information, and policy serial number as adjustment information for confirmation. The time slot adjustment acknowledgment information is the time slot adjustment acknowledgment signal CA, which is the acknowledgment information corresponding to the time slot adjustment application information. The negotiation of the time slot adjustment between two adjacent nodes would not complete unless the policy serial number(s) related to adjustment transmitted between the two adjacent nodes matches the policy serial number(s) for confirmation transmitted between the two adjacent nodes, and similar process proceeds to the subsequent nodes. End-to-end time slot negotiation is not completed until the source node receives the policy serial number for confirmation that matches the policy serial number(s) related to adjustment sent by itself. The time slot adjustment process is performed once the end-to-end time slot negotiation is completed. In the process of time slot adjustment, the time slot adjustment indication information is carried in the time slot adjustment indication signal C, which is intended to indicate enabling the time slot adjustment policy. The source node sends the serial number of the policy for execution in the adjustment along with the time slot adjustment indication signal C. In this embodiment, the time slot adjustment indication information includes the serial number of the policy for execution in the adjustment, each node adjusts the time slot(s) according to the serial number of the policy for execution in the adjustment after receiving the time slot adjustment indication signal.

It should be noted that in the above embodiment, the source node sends the time slot adjustment policy information including the time slot adjustment application information and the information about adjustment to each downstream node. As such, each downstream node obtains the slot adjustment application information along with the information about adjustment when receiving the time slot adjustment policy information. The slot adjustment application information triggers the negotiation for slot adjustment, while the information about adjustment allows the node which receives the information to determine the content of the time slot adjustment policy. Therefore, each downstream node that receives the time slot adjustment policy information performs the negotiate and adjust the time slot according to the time slot adjustment policy information. The source node can complete the time slot negotiation without two process of sending the time slot adjustment application information and sending the time slot adjustment content to the downstream node, which can improve the efficiency of the negotiation of time slot adjustment.

It should be noted that in time slot adjustment, the source node and the destination node perform handshake and negotiation through the time slot adjustment application signal CR and the time slot adjustment acknowledgment signal CA. Time slot serial number(s) of the time slot(s) for adjustment and the service serial number(s) are sent along with the CR signal. Time slot serial number(s) of the time slot(s) for adjustment and the service serial number are also carried within the returned CA signal. Time slot serial number(s) of the time slot(s) is/are indicative of which time slot(s) is/are subjected to adjustment. Service serial number(s) is/are indicative which client's time slot(s) is/are subject to adjustment. In the specification of related art, only one CR, one time slot serial number and one service serial number can be carried in each frame. If 10 time slots need to be adjusted, the time slot adjustment application signals CRs, time slot serial numbers and service serial numbers need to be transmitted via 10 frames, and if 400 time slots need to be adjusted, the time slot adjustment application signals CRs, time slot serial numbers and service serial numbers need to be transmitted via 400 frames. Similarly, during the transmission of the time slot adjustment acknowledgment, CA signal, only one CA signal, one time slot serial number and one service serial number can be sent in each frame. If 400 time slots are adjusted, the CAs, time slot serial numbers and service serial numbers need to be sent back via 400 frames. As such, the handshake and negotiation are very slow and the efficiency of negotiation of time slot adjustment is also very low. Therefore, in the time slot adjustment scheme set forth in the embodiments of the present disclosure, all the time slot serial numbers and service serial numbers that need to be negotiated can be packaged into a policy adjustment scheme, and transmitted to each node in advance in the form of a packet. As such, each downstream node is notified with the time slot information for the adjustment without carrying the time slot serial numbers and service serial numbers.

It should be noted that when the time slot adjustment policy information further includes service serial number(s), time slot adjustment policy acknowledgment information includes service serial number(s) for confirmation corresponding to the service serial number(s).

It should be noted that in the process of negotiation of time slot adjustment, the information about adjustment sent by an intermediate node may be the same as or different from the information about adjustment sent by its previous node, that is, the intermediate node may determine the information about the adjustment according to the time slot adjustment capability supported.

In an embodiment, when the information about adjustment indicates the time slot serial number(s) related to adjustment, an intermediate node may find that time slot serial number(s) that it can support cannot be consistent with those sent by the upstream node. In this case, the intermediate node can determine time slot serial number(s) of the time slot(s) for adjustment according to the slot adjustment capability supported by the node itself, and transmit the time slot serial number(s) to the downstream node.

In an embodiment, when the information about adjustment indicates the policy serial number related to adjustment, an intermediate node may find that policy serial number related to adjustment that it can support cannot be consistent with that sent by the upstream node. In this case, the intermediate node can determine policy serial number related to adjustment according to the time slot adjustment capability supported by the node itself, and transmit the policy serial number related to adjustment to the downstream node.

It should be noted that the time slot adjustment acknowledgment information is the acknowledgment information corresponding to the time slot adjustment application information. The upstream node of two adjacent nodes would not continue to transmit back the time slot adjustment acknowledgment information towards the source node unless the information about adjustment transmitted between the two adjacent nodes matches adjustment information for confirmation between the two adjacent nodes. The process repeats until the time slot adjustment acknowledgment information reaches the source node.

In an embodiment, the time slot adjustment policy information can be directly encapsulated in an adjustment policy packet and transmitted to each node. Several embodiments will be illustrated in greater detail below to describe the process of time slot adjustment with transmission of an adjustment policy packet in which a time slot adjustment policy information is encapsulated.

In an embodiment, time slot adjustment policy information is transmitted via a time slot adjustment policy packet. The information about adjustment included in the time slot adjustment policy information includes a policy serial number related to adjustment. Before sending the time slot adjustment policy information to the destination node through the downstream node(s), the source node sends an adjustment policy packet carrying the policy serial number related to adjustment and the policy information about the adjustment corresponding to the policy serial number to the downstream node. As such, each downstream node and the destination node store the policy serial number and the policy information about adjustment. The policy information related to adjustment includes all the time slot serial numbers, services serial numbers, and the adjustment type that are associated with the adjustment. The adjustment policy packet includes a packet type identifier field, a first packet field, a second packet field and a third packet field. When the packet type identifier field is valued as a first preset value, the first packet field is intended to be populated with a service serial number. The second packet field is intended to be populated with all the time slot serial numbers of time slots for adjustment. The third packet field is intended to be populated with the policy serial number related to adjustment.

In another embodiment, time slot adjustment policy information is transmitted via a time slot adjustment policy packet. The information about adjustment included in the time slot adjustment policy information includes a policy serial number related to adjustment. Before sending the time slot adjustment policy information to the destination node through the downstream node(s), the source node sends an adjustment policy packet carrying the policy serial number related to adjustment and the policy information about the adjustment corresponding to the policy serial number to the downstream node. As such, each downstream node and the destination node store the policy serial number and the policy information about adjustment. The policy information about adjustment includes all the time slot serial numbers, services serial numbers, and the adjustment type that are associated with the adjustment. The adjustment policy packet includes a packet type identifier field. When the packet type identifier field is valued with a second preset value, the adjustment policy packet is intended to carry time slot adjustment policy information. The adjustment policy packet includes a fourth packet field intended to be populated with information about adjustment. The fourth field includes a first packet field intended to be populated with service serial number, a second packet field intended to be populated with all time slot serial numbers of the time slots for adjustment, and a third packet field intended to be populated with policy serial number related to adjustment.

It should be noted that the adjustment type involved in the above embodiments includes time slot increase adjustment corresponding to bandwidth increase demand or time slot decrease adjustment corresponding to bandwidth decrease demand.

In another embodiment, the time slot adjustment policy information is transmitted via a time slot adjustment policy packet. The information about adjustment carried in the time slot adjustment policy information includes the policy serial number related to adjustment. The time slot adjustment policy includes the policy serial number related to adjustment and the policy information about adjustment corresponding to policy serial number. The time slot adjustment policy is issued by a network management system.

It should be noted that the source node can send the above-mentioned adjustment policy packet to the destination node via the downstream node(s) through various channels such as network pipeline channels, common service channels or general communication channels (GCCs) in carrier frames, and the present disclosure is not limited thereto.

It should be noted that the packet format of the adjustment policy packet can be selected according to the actual network environment, such as Ethernet packet format or Link Layer Discovery Protocol packet format.

In an embodiment, the information about adjustment includes the policy serial number related to adjustment, the time slot adjustment policy information is carried in a first time slot adjustment packet. The first time slot adjustment packet includes a fifth packet field intended to be populated with the time slot adjustment application information, a sixth packet field intended to be populated with the policy serial number related to adjustment, and a seventh packet field intended to be populated with the time slot adjustment policy acknowledgment information. The time slot adjustment application information in the fifth packet field is set to be valid, and the time slot adjustment policy acknowledgment information in the seventh packet field is set to be invalid.

In another embodiment, the information about adjustment includes the policy serial number related to adjustment, the time slot adjustment policy acknowledgment information is carried in a second time slot adjustment packet. The second time slot adjustment packet includes a fifth packet field intended to be populated with the time slot adjustment application information, a sixth packet field intended to be populated with the policy serial number related to adjustment, and a seventh packet field intended to be populated with the time slot adjustment policy acknowledgment information. The time slot adjustment application information in the fifth packet field is set to be invalid, and the time slot adjustment policy acknowledgment information in the seventh packet field is set to be valid.

It should be noted that the source node may send time slot adjustment policy information in various manners. The source node may continuously/periodically send time slot adjustment policy information to the destination node, or it may only send time slot adjustment policy information to the destination node under certain conditions.

In an embodiment, in order to ensure the success of time slot adjustment, the source node can continuously/periodically send time slot adjustment policy information to the destination node through the downstream node(s) until receiving the time slot adjustment policy acknowledgment information returned by the destination node through the downstream node.

In another embodiment, the source node will continuously monitor whether it receives the time slot adjustment policy acknowledgment information returned by the destination node through the downstream node(s). However, if the time slot adjustment policy acknowledgment information is not received within a first preset time period, the source node may assume that the end-to-end link is faulty and stop sending the time slot adjustment policy information.

It should be noted that the source node may send time slot adjustment indication information in various manners.

In an embodiment, the source node sends the time slot adjustment indication information to the destination node through a downstream node by means of a plurality of carrier frames in a multiframe.

In an embodiment, when receiving a failure indication signal, the source node continuously/periodically sends slot adjustment indication information to the destination node through the downstream node until the failure indication signal is no longer received.

In an embodiment, the source node sends the time slot adjustment indication information to the destination node through a downstream node. If failing to receive the adjustment success indication information from the destination node within a second preset time period, the source node repeatedly sends the time slot adjustment indication information, until receiving the adjustment success indication information from the destination node within the second preset time period.

In an embodiment, the source node continuously/periodically sends the time slot adjustment indication information to the destination node through the downstream node until receiving the adjustment success indication information from the destination node.

Through the embodiments described above, the source node sends time slot adjustment policy information to the destination node via a downstream node, such that the downstream node and the destination node determine the respective time slot adjustment policy according to the time slot adjustment policy information. After receiving the time slot adjustment policy acknowledgement information returned by the destination node via the downstream node, the source node adopts the corresponding time slot adjustment policy to complete the time slot adjustment, and at the same time sends the time slot adjustment indication information to the destination node via the downstream node, such that each of the downstream node and the destination node adopts the respective time slot adjustment policy to complete the time slot adjustment according to the time slot adjustment indication information. As such, after the end to end handshake and negotiation of all nodes on the time slot adjustment is successful, the time slot adjustment is performed sequentially starting from the source node, which can not only reduce the negotiation time, but also avoid the fallback requirement caused by the negotiation failure in the hop-by-hop adjustment scheme, thereby improving the time slot negotiation efficiency and the time slot adjustment success rate.

It should be noted that in the process of negotiation of the time slot adjustment and the execution of the adjustment, the time slot adjustment policy information, time slot adjustment indication information and service packet sent by the source node are all transmitted to the destination node through the intermediate node(s). The time slot adjustment policy acknowledgment information returned from the destination node also needs to be transmitted to the source node through the intermediate node(s). Therefore, several embodiments will be illustrated below to describe the time slot adjustment flow associated with the intermediate node(s).

In an embodiment, an intermediate node receives the time slot adjustment policy information sent by an upstream node, determines the corresponding time slot adjustment policy according to the time slot adjustment policy information, and sends the time slot adjustment policy information to a downstream node. As such, the downstream node to the intermediate node determines the corresponding time slot adjustment policy according to time slot adjustment policy information. When the intermediate node receives the time slot adjustment policy acknowledgment information returned by its downstream node, it forwards the time slot adjustment policy acknowledgment information to its upstream node. When receiving the time slot adjustment indication information sent by the upstream node, the intermediate node adopts the corresponding time slot adjustment policy to complete the time slot adjustment, and forwards the time slot adjustment indication information to the downstream node, such that the downstream node completes the time slot adjustment by adopting the corresponding time slot adjustment policy according to the time slot adjustment indication information.

It should be noted that the time slot adjustment policy information includes time slot adjustment application information and information about adjustment. The time slot adjustment application information is intended to request time slot adjustment. The information about adjustment is intended to determine the policy content of the time slot adjustment policy. The time slot adjustment policy acknowledgment information is sent by the destination node after receiving the time slot adjustment application information. The time slot adjustment indication information is sent by the source node after receiving the time slot adjustment policy acknowledgment information.

In an embodiment, the intermediate node continuously/periodically sends time slot adjustment policy information to the downstream node until receiving the time slot adjustment policy acknowledgment information returned by the downstream node.

In an embodiment, the intermediate node continuously sends time slot adjustment policy information to the downstream node within a first preset time period, and stops sending time slot adjustment policy information when no time slot adjustment policy acknowledgment information returned by the downstream node is received within the first preset time period.

It can be understood that the sending policy of the intermediate node for the time slot adjustment policy information depends on the sending behavior of the source node for the time slot adjustment policy information, in other words, after receiving the relevant information sent by the source node, the intermediate node performs the corresponding operation locally and continues to forward this information to the downstream node.

It can be understood that the information about adjustment in the time slot adjustment policy information received by the intermediate node can be the time slot serial numbers related to adjustment or the policy serial number related to adjustment. The intermediate node determines the policy content of the time slot adjustment policy locally according to the received information about adjustment, and transmits the same to the downstream node.

In an embodiment, when the information about adjustment received by the intermediate node is the time slot serial number related to adjustment, the intermediate node determines the time slot serial number related to adjustment of the node according to the supported time slot adjustment capability, and sends it to the downstream node as the time slot adjustment policy.

In an embodiment, when the information about adjustment received by the intermediate node is the policy serial number related to adjustment, the intermediate node determines the policy serial number related to adjustment of the node according to the supported time slot adjustment capability, and sends it to the downstream node as the time slot adjustment policy.

It shall be noted that, in the time slot adjustment scheme set forth in the embodiments of the present disclosure, all the time slot serial numbers and service serial numbers that need to be negotiated can be packaged into a policy adjustment scheme encapsulated in an adjustment policy packet, and transmitted to each node in advance in the form of a packet. As such, each downstream node is notified with the time slot information for the adjustment without carrying the time slot serial numbers and service serial numbers. The packet can be sent in various manners. In an implementation, the packet can be sent by the source node to other nodes excluding the source node before sending the time slot adjustment policy information. In another implementation, the packet can be centrally distributed by a network management system.

In an embodiment, the adjustment policy packet includes a packet type identifier field, a first packet field, a second packet field and a third packet field. When the packet type identifier field is valued as a first preset value, the first packet field is intended to be populated with a service serial number. The second packet field is intended to be populated with all the time slot serial numbers of time slots for adjustment. The third packet field is intended to be populated with the policy serial number related to adjustment.

In an embodiment, the adjustment policy packet includes a packet type identifier field. When the packet type identifier field is valued with a second preset value, the adjustment policy packet is intended to carry time slot adjustment policy information. The adjustment policy packet includes a fourth packet field intended to be populated with information about adjustment. The fourth field includes a first packet field intended to be populated with service serial number, a second packet field intended to be populated with all time slot serial numbers of the time slots for adjustment, and a third packet field intended to be populated with policy serial number related to adjustment.

In an embodiment, when the information about adjustment includes the policy serial number related to adjustment, the intermediate node, before receiving the time slot adjustment policy information sent by the upstream node, receives an adjustment policy packet sent by the upstream node, which carries the policy serial number related to adjustment and the policy information about adjustment corresponding to the policy serial number related to adjustment. The intermediate node then stores the policy serial number related to adjustment and policy information about adjustment, and forwards the same to the downstream node for storage in the downstream node. The policy information about adjustment includes all time slot serial numbers, service serial numbers and adjustment type associated with adjustment.

In another embodiment, the time slot adjustment policy that includes the policy serial number related to adjustment and the policy information about adjustment corresponding to the policy serial number is distributed by a network management system.

It should be noted that the packet format of the adjustment policy packet can be Ethernet packet format or Link Layer Discovery Protocol packet format.

In an embodiment, when the information about adjustment includes a policy serial number related to adjustment, the time slot adjustment indication information includes a time slot adjustment indication signal and a policy serial number related to adjustment. The policy serial number related to adjustment in the time slot adjustment indication information is intended to determine the time slot adjustment policy to be enabled, and the time slot adjustment indication signal is intended to indicate the activation of the time slot adjustment policy to be enabled.

In an embodiment, when the information about adjustment includes the policy serial number related to adjustment, the time slot adjustment indication information includes a time slot adjustment indication signal indicative enabling the time slot adjustment policy determined in a previous negotiation of time slot adjustment.

In an embodiment, the information about adjustment includes the policy serial number related to adjustment, the time slot adjustment policy information is carried in a first time slot adjustment packet. The first time slot adjustment packet includes a fifth packet field intended to be populated with the time slot adjustment application information, a sixth packet field intended to be populated with the policy serial number related to adjustment, and a seventh packet field intended to be populated with the time slot adjustment policy acknowledgment information. The time slot adjustment application information in the fifth packet field is set to be valid, and the time slot adjustment policy acknowledgment information in the seventh packet field is set to be invalid.

In an embodiment, the information about adjustment includes the policy serial number related to adjustment, the time slot adjustment policy acknowledgment information is carried in a second time slot adjustment packet. The second time slot adjustment packet includes a fifth packet field intended to be populated with the time slot adjustment application information, a sixth packet field intended to be populated with the policy serial number related to adjustment, and a seventh packet field intended to be populated with the time slot adjustment policy acknowledgment information. The time slot adjustment application information in the fifth packet field is set to be invalid, and the time slot adjustment policy acknowledgment information in the seventh packet field is set to be valid.

It should be noted that when the time slot adjustment policy information further includes service serial number(s), time slot adjustment policy acknowledgment information includes service serial number(s) for confirmation corresponding to the service serial number(s). The adjustment type includes time slot increase adjustment corresponding to bandwidth increase demand, or time slot decrease adjustment corresponding to bandwidth decrease demand.

It should be noted that the intermediate node can send the above-mentioned adjustment policy packet to a downstream node through various channels such as network pipeline channels, common service channels or general communication channels (GCCs) in carrier frames, and the present disclosure is not limited thereto.

It should be noted that the intermediate node may forward the time slot adjustment indication information in various manners.

In an embodiment, the intermediate node forwards the time slot adjustment indication information to a downstream node by means of a plurality of carrier frames in a multiframe.

In an embodiment, when receiving a failure indication signal, the intermediate node continuously/periodically sends time slot adjustment indication information to the downstream node until the failure indication signal is no longer received.

In an embodiment, the intermediate node forwards the time slot adjustment indication information to the downstream node. If failing to receive the adjustment success indication information from the destination node within a second preset time period, the intermediate node repeatedly sends the time slot adjustment indication information, until receiving the adjustment success indication information from the destination node within the second preset time period.

In an embodiment, the intermediate node continuously/periodically forwards the time slot adjustment indication information to the downstream node until receiving the adjustment success indication information from the destination node.

According to the embodiments of the present disclosure concerning the time slot adjustment of the intermediate node, the intermediate node determines the time slot adjustment policy of the node according to the time slot adjustment policy information sent by the source node, and forwards the time slot adjustment application information and the time slot adjustment policy information, such that other downstream nodes can negotiate the time slot adjustment in turn. After receiving the time slot adjustment policy acknowledgment information returned by the downstream node, the intermediate node forwards the time slot adjustment policy acknowledgment information, such that the source node finally know that the end-to-end time slot adjustment negotiation is successful. The intermediate node processes the service packet based on the time slot adjustment indication information sent by the source node, and forwards the time slot adjustment indication information to another downstream node, such that the downstream nodes process the service packet according to the negotiated time slot in turn, reducing the negotiation time, avoiding the roll back caused by the negotiation failure in the hop-by-hop adjustment scheme, and improving the efficiency of time slot adjustment negotiation and the success rate of time slot adjustment.

It should be noted that in the process of time slot adjustment negotiation and the execution of the adjustment, the time slot adjustment policy information, time slot adjustment indication information and service packet sent by the source node are forwarded by the intermediate node(s) and finally reach the destination node. The destination node transmits the time slot adjustment policy acknowledgment information to the source node via the intermediate node(s). Therefore, several embodiments will be illustrated below to describe the time slot adjustment flow associated with the destination node.

In an embodiment, the destination node receives the time slot adjustment policy information sent by the source node through the upstream node(s), determines the corresponding time slot adjustment policy according to the time slot adjustment policy information, and then sends the time slot adjustment policy acknowledgment information to the source node through the upstream node(s) according to the time slot adjustment application information. When receiving the time slot adjustment indication information sent by the source node through the upstream node(s), the destination node completes the time slot adjustment by adopting the corresponding time slot adjustment policy.

It should be noted that the time slot adjustment policy information includes time slot adjustment application information and information about adjustment. The time slot adjustment application information is intended to request time slot adjustment. The information about adjustment is intended to determine the policy content of the time slot adjustment policy. The time slot adjustment indication information is sent by the source node after receiving the time slot adjustment policy acknowledgment information.

It can be understood that the information about adjustment in the time slot adjustment policy information received by the destination node can be the time slot serial numbers related to adjustment or the policy serial number related to adjustment. The destination node determines the policy content of the time slot adjustment policy locally according to the received information about adjustment. The destination node is the end node in a link, the destination node thus does not forward the received slot adjustment policy information to another downstream node, and the time slot adjustment negotiation terminates at the destination node.

In an embodiment, when the information about adjustment received by the destination node is the time slot serial number related to adjustment, the destination node determines the time slot serial number related to adjustment of the node according to the supported time slot adjustment capability.

In an embodiment, when the information about adjustment received by the destination node is the policy serial number related to adjustment, the destination node determines the policy serial number related to adjustment of the node according to the supported time slot adjustment capability.

It shall be noted that, in the time slot adjustment scheme set forth in the embodiments of the present disclosure, all the time slot serial numbers and service serial numbers that need to be negotiated can be packaged into a policy adjustment scheme encapsulated in an adjustment policy packet, and transmitted to each node in advance in the form of a packet. As such, each downstream node is notified with the time slot information for the adjustment without carrying the time slot serial numbers and service serial numbers. The packet can be sent in various manners. In an implementation, the packet can be sent by the source node to other nodes excluding the source node before sending the time slot adjustment policy information. In another implementation, the packet can be centrally distributed by a network management system.

In an embodiment, the adjustment policy packet includes a packet type identifier field, a first packet field, a second packet field and a third packet field. When the packet type identifier field is valued as a first preset value, the first packet field is intended to be populated with a service serial number. The second packet field is intended to be populated with all the time slot serial numbers of time slots for adjustment. The third packet field is intended to be populated with the policy serial number related to adjustment.

In an embodiment, the adjustment policy packet includes a packet type identifier field. When the packet type identifier field is valued with a second preset value, the adjustment policy packet is intended to carry time slot adjustment policy information. The adjustment policy packet includes a fourth packet field intended to be populated with information about adjustment. The fourth field includes a first packet field intended to be populated with service serial number, a second packet field intended to be populated with all time slot serial numbers of the time slots for adjustment, and a third packet field intended to be populated with policy serial number related to adjustment.

In an embodiment, when the information about adjustment includes the policy serial number related to adjustment, the destination node also receives an adjustment policy packet with the policy serial number related to adjustment and the policy information about adjustment corresponding to the policy serial number related to adjustment sent by the source node through the upstream node before receiving the time slot adjustment policy information sent by the source node. The destination node stores the policy serial number related to adjustment and policy information about adjustment, for determining the time slot adjustment policy in the subsequent time slot adjustment negotiation. The policy information about adjustment includes all time slot serial numbers, service serial numbers and adjustment type associated with adjustment.

It should be noted that the packet format of the adjustment policy packet can be Ethernet packet format or Link Layer Discovery Protocol packet format.

In an embodiment, when the information about adjustment includes a policy serial number related to adjustment, the time slot adjustment indication information includes a time slot adjustment indication signal and a policy serial number related to adjustment. The policy serial number related to adjustment in the time slot adjustment indication information is intended to determine the time slot adjustment policy to be enabled, and the time slot adjustment indication signal is intended to indicate the activation of the time slot adjustment policy to be enabled.

In an embodiment, when the information about adjustment includes the policy serial number related to adjustment, the time slot adjustment indication information includes a time slot adjustment indication signal indicative enabling the time slot adjustment policy determined in a previous negotiation of time slot adjustment.

In an embodiment, the information about adjustment includes the policy serial number related to adjustment, the time slot adjustment policy information is carried in a first time slot adjustment packet. The first time slot adjustment packet includes a fifth packet field intended to be populated with the time slot adjustment application information, a sixth packet field intended to be populated with the policy serial number related to adjustment, and a seventh packet field intended to be populated with the time slot adjustment policy acknowledgment information. The time slot adjustment application information in the fifth packet field is set to be valid, and the time slot adjustment policy acknowledgment information in the seventh packet field is set to be invalid.

In an embodiment, the information about adjustment includes the policy serial number related to adjustment, the time slot adjustment policy acknowledgment information is carried in a second time slot adjustment packet. The second time slot adjustment packet includes a fifth packet field intended to be populated with the time slot adjustment application information, a sixth packet field intended to be populated with the policy serial number related to adjustment, and a seventh packet field intended to be populated with the time slot adjustment policy acknowledgment information. The time slot adjustment application information in the fifth packet field is set to be invalid, and the time slot adjustment policy acknowledgment information in the seventh packet field is set to be valid.

It should be noted that when the time slot adjustment policy information further includes service serial number(s), time slot adjustment policy acknowledgment information includes service serial number(s) for confirmation corresponding to the service serial number(s). The adjustment type includes time slot increase adjustment corresponding to bandwidth increase demand, or time slot decrease adjustment corresponding to bandwidth decrease demand.

In an embodiment, in order to notify the source node that the time slot adjustment is successful, so that the source node can complete the time slot adjustment by adopting the corresponding time slot adjustment policy, the destination node may send adjustment success indication information to the source node or the network management system, and the adjustment success indication information is indicative of the completion of the time slot adjustment according to the time slot adjustment indication information. In this way, if the link fails after the time slot adjustment, the destination node cannot send the adjustment success indication information to the source node, and the source node will not start to use the adjusted time slot carrier scheme for service processing.

According to the embodiments of the present disclosure relating to the service processing of the intermediate node, the destination node determines the time slot adjustment policy of the node according to the time slot adjustment policy information forwarded by the intermediate node, and sends the time slot adjustment policy acknowledgment information to the source node, such that the source node can finally know that the end-to-end time slot negotiation is successful, and process the service packet based on the time slot adjustment indication information sent by the source node. Thereby, the negotiation time is reduced, the rollback caused by the negotiation failure in the hop-by-hop adjustment scheme is avoided, and the time slot adjustment negotiation efficiency and the time slot adjustment success rate are enhanced.

Several embodiments will be described below to illustrate the service processing scheme proposed in the present disclosure.

### EMBODIMENT ONE

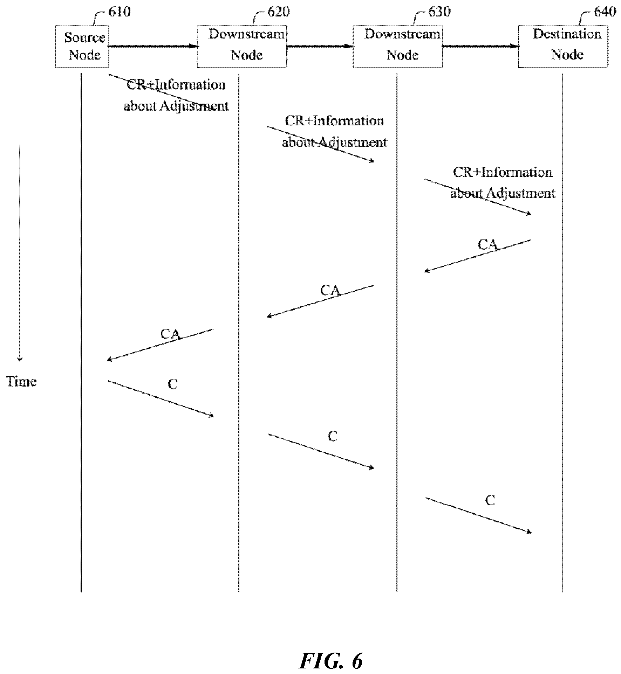

As shown in FIG. 6, the network management system transmits time slot configuration contents and adjustment commands to the source node and the destination node, and determines the source node 610 and the destination node 640. The time slot adjustment is initiated by the source node 610. First, the source node 610 sends a time slot adjustment application i.e., the CR signal to the downstream node 620, along with the time slot serial number related to adjustment, to notify the downstream node 620 with the time slot serial number related to adjustment. After receiving the CR signal, the downstream node 620 starts the preparation, and generates the adjustment policy corresponding to the time slot serial number according to the received time slot adjustment policy information. In this embodiment, the downstream node 620 does not immediately send back the time slot adjustment acknowledgment, i.e., the CA signal to the source node 610, but proceeds to send the CR signal to the downstream node 630 along with the time slot serial number related to adjustment. Similarly, the downstream node 630 starts the preparation after receiving the CR signal sent by the downstream node 620, and does not immediately send back the slot adjustment acknowledgment CA signal to the downstream node 620, but proceeds to send the CR signal to the destination node 640 along with the time slot serial number related to adjustment. The destination node 640 completes the preparation after receiving the CR signal sent by its upstream node, i.e., downstream node 630, and replies to the downstream node 630 with the time slot adjustment policy acknowledgment information. The time slot adjustment policy acknowledgment information includes time slot adjustment acknowledgment information and adjustment information for confirmation. The time slot adjustment acknowledgment information is the acknowledgment information corresponding to the time slot adjustment application information, which is carried in the time slot adjustment acknowledgment, i.e., the CA signal. The adjustment information for confirmation includes the adjusted time slot serial number. After receiving the CA signal from the destination node 640, the downstream node 630 returns the CA signal and the adjusted time slot serial number to the downstream node 620. After receiving the CA signal from the destination node 630, the downstream node 620 returns the CA signal and the adjusted time slot serial number to the source node 610. After receiving from downstream, the CA and the adjusted slot serial number, the source node 610 determines that the returned time slot serial number matches the applied time slot serial number, and determines that the negotiations between the source node 610 and the destination node 640, as well as between the intermediate nodes (downstream node 620 and downstream node 630) have been completed, and the time slot adjustment negotiation between all nodes is successful. At this point, the source node 610 starts to send the adjustment indication, i.e., signal C to the downstream node. At the same time, the source node 610 completes the time slot adjustment according to the new time slot scheme. The downstream node 620, after receiving the signal C, forwards the service packet according to the time slot adjustment policy obtained in previous negotiation, thus completing the time slot adjustment between the source node 610 and the downstream node 620. When receiving the adjustment indication, i.e., signal C from the source node 610, the downstream node 620 sends the adjustment indication, i.e., signal C to the downstream node 630. The downstream node 620 forwards the service packet according to the time slot adjustment policy obtained in the previous negotiation. The downstream node 630 receives the adjustment indication, i.e., signal C and forwards the service packet according to the time slot adjustment policy obtained in the previous negotiation, thus completing the time slot adjustment between the downstream node 620 and the downstream node 630. Similarly, when receiving the adjustment indication, i.e., signal C from downstream node 620, downstream node 630 also sends the adjustment indication, i.e., signal C to destination node 640 downstream. And the downstream node 630 also forwards the service packet according to the time slot adjustment policy obtained in the previous negotiation. After receiving the adjustment indication, i.e., signal C, the destination node 640 completes the time slot adjustment between the downstream node 630 and the destination node 640. After the destination node 640 completes the time slot adjustment, the end-to-end time slot adjustment is completed. After completing the time slot adjustment, the destination node 640 can report the adjustment result to the network management center, and inform the source node 610 that the adjustment is successful and is finished. When the network management center and the source node 610 do not receive the time slot adjustment success indication signal from the destination node 640 within a certain period of time, the source node 610 may resend the slot adjustment indication, i.e., signal C. The source node 610 may also continuously/repeatedly send the time slot adjustment indication, i.e., signal C, until receiving the time slot adjustment success indication signal from the destination node 640.

In this embodiment, the negotiation of time slot adjustment and the execution of the adjustment are performed from the source node 610 to the destination node 640 in an end-to-end manner. The intermediate nodes 620, 630 participate in the negotiation, and sequentially transmit the time slot adjustment negotiation signals in a relay manner. As such, the handshake and negotiation mechanism between the source node 610 and the destination node 640 on time slot adjustment is achieved. When the negotiation between the source node 610 and the destination node 640 is successful, it means that the negotiation on time slot adjustment between the source node 610 and the destination node 640, including all intermediate nodes in the network, is successful. The time slot adjustment would not be started from the source node 610 unless the handshake and negotiation on time slot adjustment among all nodes is successful. The end-to-end method for time slot adjustment of the embodiments of the present disclosure can be adopted for either the time slot increase or decrease, and negotiation on time slot adjustment and time slot adjustment can be performed from the source node 610 to the destination node 640 successively. For the adjustment of time slot increase, the client service bandwidth is not increased and the initial bandwidth is remained until the end-to-end adjustment of time slot increase is completed. As such, even if the bandwidth between upstream nodes is large and the bandwidth between downstream nodes is small during the end-to-end adjustment of time slot increase, the client's service bandwidth remains the initial bandwidth, and the client's service bandwidth is consistent across the downstream nodes. Hence, so even if the upstream pipeline bandwidth is large, the effective client's service bandwidth does not increase, so no service overflow occurs.

FIG. 6 depicts a schematic diagram showing a time slot adjustment process according to an embodiment of the present disclosure. As shown in FIG. 6, initially, only one time slot is configured between the source node 610 and the intermediate node 620, between the intermediate node 620 and the intermediate node 630, and between the intermediate node 630 and the destination node 640 to deliver the client's service. The client's service bandwidth that one time slot can deliver is assumed to be only 10Mbps. When it is necessary to adjust the bandwidth to 20Mbps, the bandwidth of client's service will still be 10Mbps at the beginning. During the adjustment process, the time slot between the source node 610 and the intermediate node 620 will be adjusted from 1 time slot to 2 time slots, and the carrier bandwidth is then 20Mbps. There is still only one time slot between the intermediate node 620 and the intermediate node 630, and between the intermediate node 630 and the destination node 640, and the client's service at the rate of 10Mbps is transmitted there between. At source node 610, when the client's service at the rate of 10Mbps is carried in two time slots, since the rate of the client's service is less than the time slot rate of the carrier, a large amount of idle information, such as idle code blocks, needs to be inserted into one client's service. After adding a large amount of idle information, the total rate is increased to 20Mbps, and then the service is carried in two time slots. At intermediate node 620, the client's traffic is received from source node 610, and a large amount of idle information inserted between packet is deleted, so that the remaining client's service can be carried in one time slot. The intermediate node 620 carries the client service in one time slot with the idle information removed and sends the client's traffic to intermediate node 630. When the time slot between intermediate node 620 and intermediate node 630 is adjusted from 1 time slot to 2 time slots, intermediate node 620 does not delete the idle information when receiving the service traffic from the source node 610. Intermediate node 630 carries the client's traffic over one time slot with idle information removed. When the time slot between intermediate node 630 and destination node 640 is adjusted from one time slot to two time slots, the number of time slots of the end-to-end carrier pipeline between source node 610 and destination node 640 is adjusted to two time slots to carry client's service at 20Mbps. The rate of client's service is adjusted to 20Mbps only after the end-to-end number of time slots adjustment is successful. For the adjustment of time slot increase, the time slot adjustment of end-to-end nodes is completed first, and then the rate of the client's service is increased and adjusted. Similarly, for the adjustment of time slot decrease, the rate of the client's service should be decreased first, and then the time slots between end-to-end nodes should be adjusted. The rate of client's service should always be kept lower than the carrier rate of any node in the carrier pipeline of end-to-end nodes. For any node, when the upstream time slot bandwidth is greater than the downstream time slot bandwidth, a large amount of idle information in the upstream client service is deleted, and then the client's service is sent to the downstream time slot. When the bandwidth of the upstream time slot is smaller than that of the downstream time slot, a large amount of idle information is inserted into the upstream client's service and then sent to the downstream time slot. In addition, when receiving the adjustment indication, signal C, the intermediate node 620 or the intermediate node 630 immediately sends an adjustment indication downstream, and the downstream time slot increase adjustment is also started immediately, so that the time slot increase adjustment starts from source node 610, from the upstream nodes and to the downstream nodes, and then all nodes on the network increase the time slot one by one, and the adjustment between the upstream and downstream nodes is carried out in turn. The inconsistencies of the number of time slots or the bandwidth between upstream and downstream nodes only last for very short moment, and then the number of time slots between upstream and downstream nodes can be consistent soon, thus avoiding the problem of service overflow caused by the inconsistency of time slots between upstream and downstream nodes.

### EMBODIMENT TWO

During time slot adjustment, the source node and the destination node perform handshake and negotiation through the time slot adjustment application signal CR and the time slot adjustment acknowledgment signal CA. Time slot serial number(s) of the time slot(s) for adjustment and the service serial number(s) are sent along with the CR signal. Time slot serial number(s) of the time slot(s) for adjustment and the service serial number are also carried within the returned CA signal. Time slot serial number(s) of the time slot(s) is/are indicative of which time slot(s) is/are subjected to adjustment. Service serial number(s) is/are indicative which service's time slot(s) is/are subject to adjustment. In the relevant technical specifications, only one adjustment application signal, one time slot serial number and one service serial number can be transmitted in each frame. If 10 time slots need to be adjusted, the time slot adjustment application signal CR, time slot serial number and service serial number need to be transmitted via 10 frames, and if 400 time slots need to be adjusted, the time slot adjustment application signal CR, time slot serial number and service serial number need to be transmitted via 400 frames. Similarly, during the transmission of the slot adjustment acknowledgment, CA signal, only one CA signal, one time slot serial number and one service serial number can be sent in each frame. If 400 time slots are adjusted, the CAs, time slot serial numbers and service serial numbers need to be sent back via 400 frames. As such, the handshake and negotiation is very slow.

According to an embodiment of the present disclosure, a convenient way is provided to package all the time slot serial numbers and service serial numbers for negotiation into a policy adjustment scheme, and encapsulate the policy adjustment scheme in a policy adjustment packet, which is transmitted to each node in advance. The transmission of the time slot policy can be realized only by transmitting the policy serial number between the source node and the destination node during the time slot adjustment.

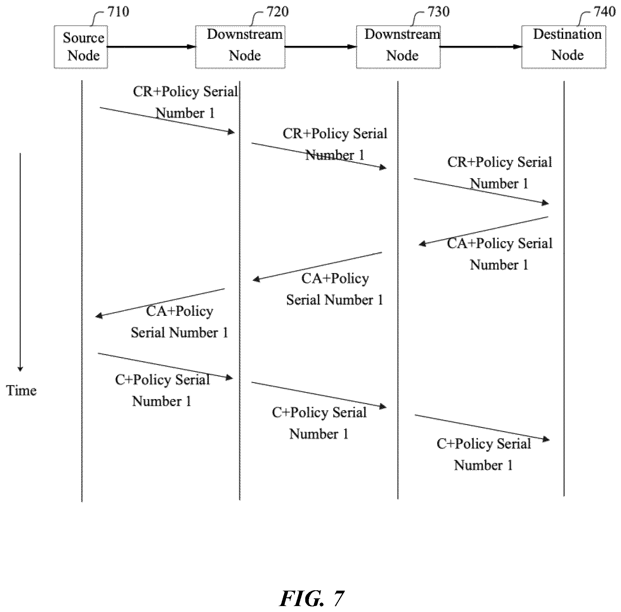

FIG. 7 depicts a schematic diagram showing a time slot adjustment process according to another embodiment of the present disclosure. As shown in FIG. 7, during the negotiation of time slot adjustment between source node 710 and destination node 740, source node 710 sends the time slot adjustment application signal CR with only the time slot adjustment policy serial number sent. In FIG. 7, all the time slot serial numbers, service serial numbers and time slot adjustment method for adjustment are packaged. The policy serial number is denoted as policy serial number 1 that contains all the time slot serial numbers, service serial numbers and adjustment method for the adjustment. The content of policy serial number 1 is transmitted to each node in form of a packet in advance. During the negotiation of time slot adjustment, it is only necessary to send the time slot adjustment application signal CR and the policy serial number 1. As such, the time slot adjustment application signal CR and the policy serial number 1 can be delivered in one frame. When sending back the time slot adjustment acknowledgment signal CA, it is also only necessary to send back the slot adjustment acknowledgment signal CA and the policy serial number 1, and the acknowledgment signal is also delivered in one frame. By transmitting the policy serial number, even if a large number of time slots need to be adjusted in the time slot adjustment, only the application signal and the adjustment policy serial number need to be transmitted in one frame. And only the acknowledgment signal and the adjustment policy serial number need to be sent back in one frame, which speeds up the handshake and negotiation process of time slot adjustment and improves the efficiency of time slot negotiation.

In an embodiment, the time slot adjustment policy content can be encapsulated in an adjustment policy packet and transmitted to each node in the form of a packet. For example, Ethernet packet format or link layer discovery protocol packet format is adopted and the packet is transmitted to each node.

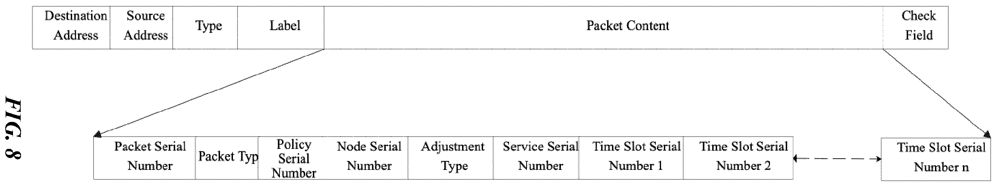

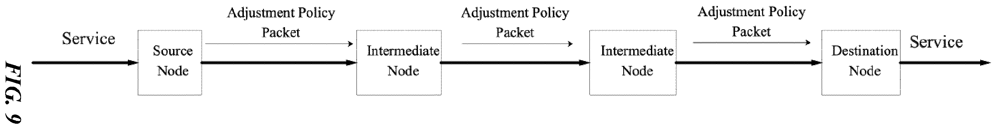

FIG. 8 depicts a schematic diagram showing encapsulation of the content of the time slot adjustment policy by means of Ethernet packet format according to an embodiment of the present disclosure. As shown in FIG. 8, the packet contains the policy serial number of time slot adjustment, the type of time slot adjustment (increase or decrease), the time slot serial numbers and the service serial number for adjustment. The adjustment content is transmitted to each node via only one packet. FIG. 9 depicts a schematic diagram showing transmission of an adjustment policy packet to other nodes from a source node according to an embodiment of the present disclosure. As shown in FIG. 9, the time slot adjustment policy packet can be sent by the source node to each of the downstream nodes, via various means such as a network pipeline channel, common service channel or general communication channel in carrier frame. The intermediate node of the network receives the time slot adjustment policy packet and forwards the same to the downstream nodes in turn until all nodes receive the time slot adjustment policy packet.

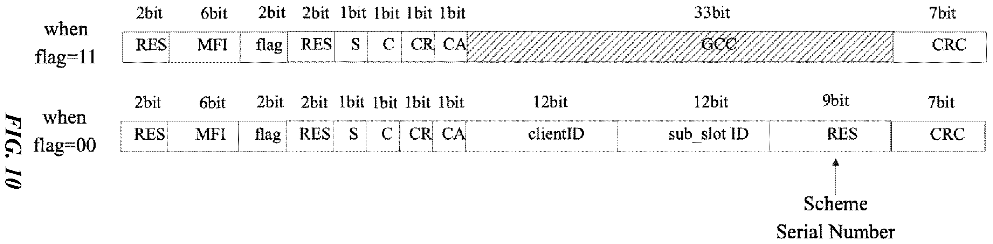

FIG. 10 depicts a schematic diagram showing a frame according to an embodiment of the present disclosure. As shown in FIG. 10, a GCC channel presents in the frame (when the content of the flag field is "11"), and the scheme packet is encoded in 64/66, which forms a code block with a length of 66 bits. All the code blocks with a length of 66 bits are transmitted in the GCC field, each GCC field can carry 33 bits, and the GCC field of two consecutive frames can carry a complete 66 code block. When the content of the flag field is "00", the contents of CR, CA, client ID, sub_slot ID and other fields are sent. After the sub_slot ID field, there can be a reserved field with a length of 9 bits (res field in the figure, which refers to the abbreviation of the word reserved), which can carry the policy serial number, and the length of 9 bits can represent 512 values of policy serial numbers.

### EMBODIMENT THREE

In the process of end-to-end negotiation of time slot adjustment and execution of adjustment, the source node sends an application to start sending time slot adjustment and provides the policy serial number related to adjustment. If the policy serial numbers for adjustment among the source node, the intermediate node and the destination node are exactly the same, the intermediate node only forwards the time slot adjustment application signal, the policy serial number and the time slot adjustment acknowledgment signal, thus realizing the end-to-end time slot adjustment handshake and negotiation process. However, in practical application, due to the different content of time slots configured by each node, the node needs to determine the policy serial number according to the time slot adjustment ability supported by the node.

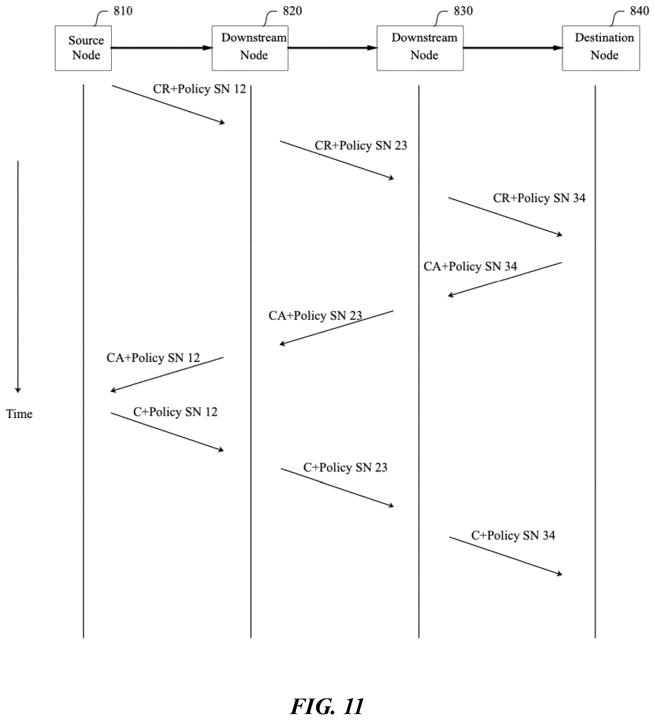

FIG. 11 depicts a schematic diagram showing a time slot adjustment process according to another embodiment of the present disclosure. In this embodiment, the adjustment contents for time slots 2 and 3 between source node 810 and downstream node 820 in FIG. 11 are denoted as policy serial number 12, the adjustment contents for time slots 5 and 8 between downstream node 820 and downstream node 830 are denoted as policy serial number 23, and the adjustment contents for time slots 1 and 7 between downstream node 830 and destination node 840 are denoted as policy serial number 34. The time slot policy serial numbers 12, 23 and 34 can be sent by the source node to each of the nodes on the network in the form of a packet. Alternatively, a network management center may send time slot policy serial numbers 12, 23 and 34 to each of the nodes. Hence, the time slot adjustment application signal CR, time slot adjustment acknowledgment signal CA and time slot adjustment indication signal C only need to carry the policy serial numbers, and the negotiation of time slot adjustment can be expedited.

### EMBODIMENT FOUR

The time slot adjustment policy packet can be delivered to each of the nodes on the network in a centralized manner, instead of delivering in turn by the source node.

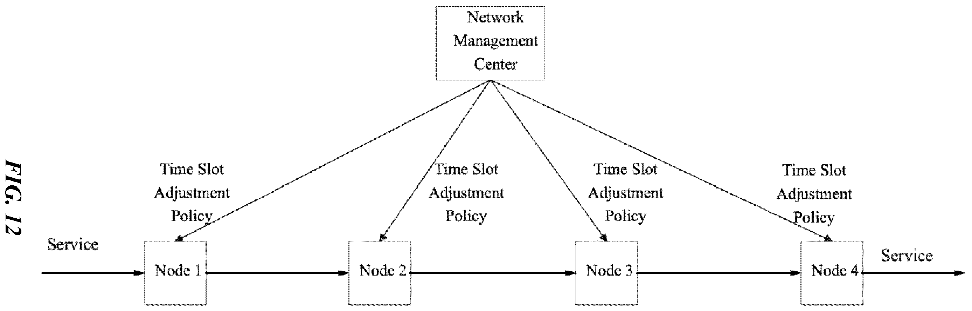

FIG. 12 depicts a schematic diagram showing transmission of an adjustment policy packet through a network management center according to an embodiment of the present disclosure. As shown in FIG. 12, a network management system of the management center sends the packet to each of the nodes in the network. The network management system centrally issues the time slot adjustment policy, which includes the content of realizing the time slot adjustment scheme and the policy serial number to each of the nodes. When each node receives the time slot adjustment policy from the network management system, the source node starts the negotiation of time slot adjustment.

The process of time slot adjustment based on the time slot adjustment policy is the same as in the previous embodiments, and which are not repeated in this embodiment.

### EMBODIMENT FIVE

In the process of end-to-end negotiation of time slot adjustment and execution of adjustment, the source node sends an application to start sending time slot adjustment and provides the time slot serial numbers, service serial number related to adjustment. If the time slot serial numbers for adjustment among the source node, the intermediate node and the destination node are exactly the same, the intermediate node only forwards the time slot adjustment application signal, the time slot serial numbers and the time slot adjustment acknowledgment signal, thus realizing the end-to-end time slot adjustment handshake and negotiation process. However, in practical application, due to the different content of time slots configured by each node, the serial number of remaining time slots between nodes may be inconsistent, and it is not possible to carry out end-to-end time slot adjustment handshake and negotiation under the condition that the serial number of time slots is exactly the same. Therefore, it is necessary for each intermediate node to determine the time slot for adjustment according to the supported time slot adjustment ability.

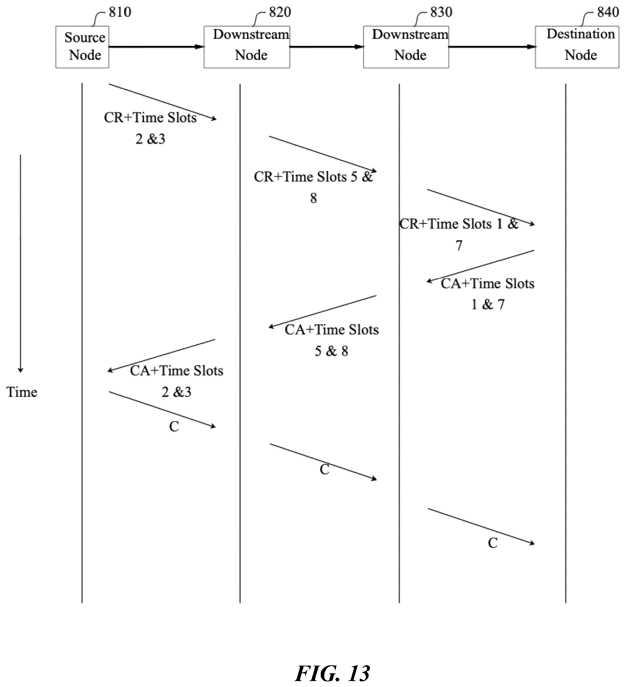

FIG. 13 depicts a flowchart showing a method for time slot adjustment according to an embodiment of the present disclosure. As shown in FIG. 13, two idle/available time slots 2 and 3 present between source node 810 and downstream node 820. Source node 810 sends an application signal CR for time slot increase and adjustment indicating the time slots 2 and 3 for increase. Time slots 2 and 3 can be added between source node 810 and downstream node 820. However, downstream node 820 and downstream node 830 cannot complete the negotiation of adding time slots 2 and 3, due to the fact that the time slots 2 and 3 between downstream node 820 and downstream node 830 are used, and end-to-end handshake and negotiation is stopped. In order to continue the negotiation of the end-to-end time slot adjustment, although the time slots for negotiation between source node 810 and downstream node 820 are time slot 2 and time slot 3, downstream node 820 selects the time slot serial numbers time slot 5 and time slot 8 to be added between downstream node 820 and downstream node 830 according to the available time slots between downstream node 820 and downstream node 830. In this way, after downstream node 820 receives the time slot increase adjustment application signal sent by the source node 810 for increasing time slot 2 and time slot 3, the time slot increase adjustment application signal CR is sent by the downstream node 820 to the downstream node 830, indicating increase of time slots 5 and 8. Similarly, downstream node 830 selects time slot 1 and time slot 7 for time slot increase between downstream node 830 and destination node 840 according to the idle time slots between downstream node 830 and destination node 840. As such, after downstream node 830 receives the time slot increase adjustment application signals CR for increasing time slot 5 and time slot 8 sent by downstream node 820, downstream node 830 sends the time slot increase adjustment application signal CR for increasing time slot 1 and time slot 7 to destination node 840. Destination node 840 sends back to downstream node 830 a time slot increase adjustment acknowledgment signal CA, for increasing time slot 1 and time slot 7 after receiving the time slot increase adjustment application signal CR for increasing time slot 1 and time slot 7. Downstream node 830 sends back a time slot increase adjustment acknowledgment signal CA, for increasing time slot 5 and time slot 8. Similar process proceeds. After receiving the time slot increase adjustment acknowledgment signal CA, for increasing time slot 5 and time slot 8, downstream node 820 sends back time slot increase adjustment acknowledgment signal CA, for increasing time slot 2 and time slot 3 to source node 810. After source node 810 receives the time slot increase adjustment acknowledgment signals CA, with time slot 2 and time slot 3 increased from the downstream nodes, although the actual time slot serial numbers added by different nodes are inconsistent, source node 810 determines that the handshake and negotiation between source node 810, downstream node 820, downstream node 830 and destination node 840 has been completed. Then, source node 810 sends a time slot increase adjustment indication signal C. Source node 810 starts to carry the client's service over time slot 2 and time slot 3. Downstream node 820 receives the time slot increase adjustment indication signal C, and extracts the client's service in time slot 2 and time slot 3, and at the same time, downstream node 820 sends the time slot increase adjustment indication signal C to downstream node 830 to carry the client's service over time slot 5 and time slot 8 between downstream node 820 and downstream node 830. Downstream node 830 receives the time slot increase adjustment indication signal C, extracts the client's service on time slot 5 and time slot 8. At the same time, downstream node 830 sends the time slot increase adjustment indication signal C to destination node 840, and carries the client's service over time slot 1 and time slot 7 between downstream node 830 and destination node 840. Destination node 840 receives the time slot increase adjustment indication signal C, and extracts the client's service in the time slot 1 and the time slot 7. At this point, the end-to-end time slot increase adjustment is completed.

### EMBODIMENT SIX

Compared with the time slot negotiation and adjustment process of increasing time slots described in Embodiment 5, Embodiment 6 provides the time slot negotiation and adjustment process of time slot decrease/reduction.

As shown in FIG. 13, the end-to-end time slot decrease process is similar to the increase process. In this case, time slots 2 and 3 of client services need to be deleted between source node 810 and downstream node 820. Source node 810 sends a time slot adjustment application signal to reduce time slots 2 and 3. Time slots 2 and 3 can be reduced between source node 810 and downstream node 820, but time slots 2 and 3 between downstream node 820 and downstream node 830 carries services of another client, not for adjustment, or the time slots 2 and 3 are idle, and there is no need to reduce them. Then downstream node 820 and downstream node 830 cannot complete the handshake and negotiation on the reduction of the time slots 2 and 3 of the target client. Thus, the negotiation of the time slot adjustment between downstream node 820 and downstream node 830 fails. Although the adjustment between source node 810 and downstream node 820 is time slot 2 and time slot 3, in order to continue the negotiation of end-to-end time slot adjustment, downstream node 820 plans to reduce time slot 5 and time slot 8 currently used by the target client between downstream node 820 and downstream node 830 according to the time slots currently used by the target client between downstream node 820 and downstream node 830. In this way, after receiving the time slot reduction adjustment application signals CR for reducing time slots 2 and 3 sent by source node 810, downstream node 820 sends the time slot reduction adjustment application signals CR for reducing time slots 5 and 8 to downstream node 830. Similar process continues. Downstream node 830 selects, according to the currently used time slots between downstream node 830 and destination node 840, time slots 1 and 7 currently used between downstream node 830 and destination node 840, for reduction, such that after downstream node 830 receives the time slot reduction adjustment application signals CR for reducing time slots 5 and slot 8 sent by downstream node 820, downstream node 830 sends the time slot reduction adjustment application signal CR for reducing time slots 1 and 7 to destination node 840. Destination node 840, after receiving the time slot reduction adjustment application signal CR for reducing time slots 1 and 7, sends back the time slot reduction adjustment acknowledgment signal CA for reducing time slots 1 and 7 to the downstream node 830. Downstream node 830, after receiving the time slot reduction adjustment acknowledgment signal CA, for reducing time slots 1 and 7 sent back by destination node 840, sends back the time slot reduction adjustment acknowledgment signal CA, for reducing time slots 5 and 8 to downstream node 820. Similar process continues. Downstream node 820 sends back the time slot reduction adjustment acknowledgment signals CA, for reducing time slots 2 and 3 to source node 810 after receiving the feedback time slot reduction adjustment acknowledgment signals CA for reducing time slots 5 and 8. After receiving the sent back time slot reduction adjustment acknowledgment signal CA, for reducing time slots 2 and 3 from downstream node, source node 810 determines that the source node, the destination node and the intermediate nodes in the network have completed the handshake and negotiation of time slot reduction adjustment. Then, source node 810 sends the time slot reduction adjustment indication signal C, and stops carrying the client's service over time slots 2 and 3. Downstream node 820 receives the time slot reduction adjustment indication signal C sent by downstream node 830 and stops carrying the client's service over time slots 5 and 8 between downstream node 820 and downstream node 830. Downstream node 830 receives the time slot reduction adjustment indication signal C, and stops extracting the client's service on time slot 5 and time slot 8. At the same time, downstream node 830 sends the time slot reduction adjustment indication signal C to destination node 840, and stop carrying the client's service over time slot 1 and time slot 7 between downstream node 830 and destination node 840. Destination node 840 receives the time slot reduction adjustment indication signal C, and stops extracting the client's service in the time slot 1 and the time slot 7. At this point, the end-to-end time slot reduction adjustment is completed.

According to the embodiments set forth in the present disclosure, different nodes select different time slot serial numbers for adjustment according to their respective time slot configuration conditions, such that although the time slot serial numbers for time slot adjustment are different among different nodes, the end-to-end time slot adjustment handshake and negotiation mechanism is not affected, and the negotiation of end-to-end time slot adjustment can still be carried out normally.

### EMBODIMENT SEVEN

When the content of the time slot adjustment policy is sent by the source node to another node, the content of the adjustment policy packet can carry the time slot adjustment application signal CR along with the time slot adjustment acknowledgment signal C.

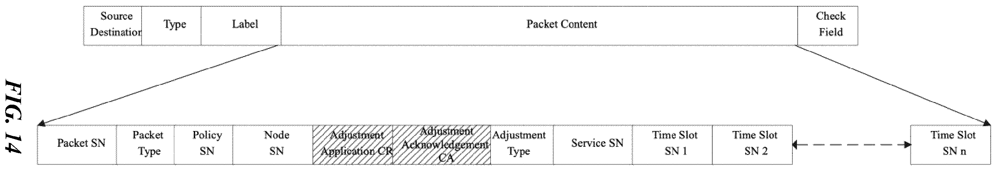

FIG. 14 depicts a schematic diagram showing a packet encapsulating the content of a time slot adjustment policy according to an embodiment of the present disclosure. As shown in FIG. 14, the packet carries the time slot adjustment application signal CR, the time slot adjustment acknowledgment signal CA, the adjustment type, the time slot serial numbers for adjustment and the service serial number. As such, all the negotiation information of time slot adjustment is carried in one packet, and the time slot adjustment application signal CR and the time slot adjustment acknowledgment signal CA are also carried when the adjustment scheme number packet is sent. The handshake and negotiation are also started during the transmission of the time slot scheme content. It is no longer necessary to separately send the time slot adjustment application signal CR and the time slot adjustment acknowledgment signal CA between nodes, thus reducing the times of transmissions of the time slot adjustment application signal CR and the time slot adjustment acknowledgment signal CA.

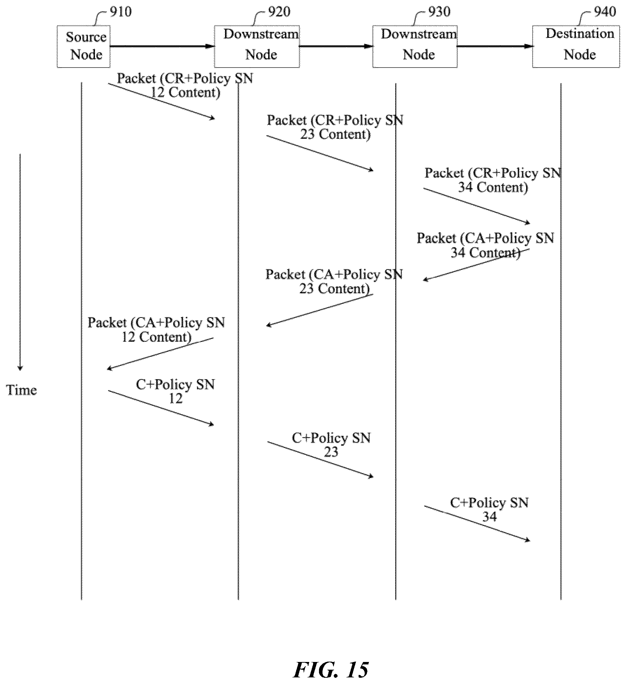

FIG. 15 depicts a schematic diagram showing a time slot adjustment process according to an embodiment of the present disclosure. Source node 910 sends an adjustment policy packet to downstream node 920, which carries the time slot content for the adjustment, service serial number and adjustment type (increase or decrease), and the time slot adjustment application signal CR is valid. After receiving the adjustment policy packet from source node 910, downstream node 920 continues to send the adjustment policy packet to downstream node 930, which carries the time slot content for adjustment, service serial number, adjustment type and the adjustment application signal CR is valid. Similar process continues, downstream node 930 sends an adjustment policy packet to destination node 940, which carries the time slot content for adjustment, service serial number, adjustment type and the adjustment application signal CR is valid. Destination node 940 receives the adjustment policy packet and sends back the adjustment policy packet carrying the adjustment scheme to downstream node 930, and the time slot adjustment acknowledgment signal CA is valid. After receiving the adjustment policy packet, downstream node 930 proceeds to send back the adjustment policy packet carrying the adjustment scheme to downstream node 920, and the adjustment acknowledgment signal CA is valid. Similar process continues, downstream node 920 sends back the adjustment policy packet carrying the adjustment scheme to source node 910, and the adjustment acknowledgment signal CA is valid. Source node 910 receives the adjustment policy packet and the time slot adjustment acknowledgment signal CA, and determines that source node 910, destination node 940 and the intermediate nodes 920-930 have completed the negotiation of adjustment. Source node 910 sends a time slot adjustment indication signal C, starts the time slot adjustment, and employs the new time slot scheme to process the client's service. Subsequently, each of the downstream nodes receives the time slot adjustment indication signal C, employs the new time slot scheme to process the client's service, and proceeds to send the time slot adjustment indication signal C downstream until destination node 940 receives the time slot adjustment indication signal C, and employs the new time slot scheme to process the client's service. At this point, the end-to-end time slot adjustment is completed.

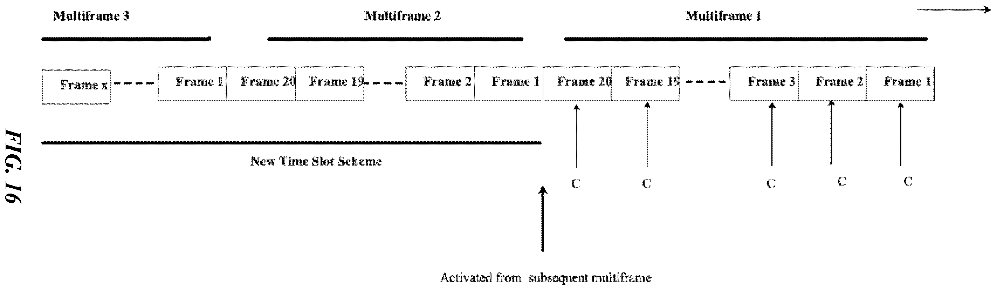

In an application, the time slot adjustment indication signal C is defined in a carrier frame, and the adjustment indication signal is transmitted with the carrier frame. When an error presents in the carrier frame, a downstream device can fail to receive the adjustment indication signal C correctly, resulting in a failure of the downstream node to start the adjustment and a failure of forwarding the adjustment indication signal C to a further downstream node. In order to improve the reliable transmission of the adjustment indication signal C, a plurality of adjustment indication signals C can be transmitted, such that even if some adjustment indication signals C are lost due to signal interference, other adjustment indication signals C will be transmitted to the downstream device. FIG. 16 depicts a schematic diagram showing a carrier frame according to an embodiment of the present disclosure. For example, an adjustment indication signal C is sent in a plurality of carriers. As shown in FIG. 16, a multiframe composed of 20 frames is adopted for the carrier frames. In an application, the indication signal can be transmitted over several frames in one multiframe. For example, the indication signal is transmitted over frame 1, frame 2 and frame 3 of the first three frames, such that the indication signal C can be transmitted three times. In use, the time slot adjustment indication signal C can also be transmitted in all frames of the multiframe, such that the adjustment indication signal C is transmitted 20 times. In this embodiment, the adjustment indication signal C is transmitted 20 times. When multiple transmissions of indication signals C are employed, even if a carrier frame is lost due to error code and other reasons, as long as the adjustment indication signal C of one carrier frame is transferred to the downstream device, the downstream device can adjust the time slot and send the indication signal C to the downstream device to avoid adjustment interruption. In an application, if the adjustment indication signal is received in a multiframe cycle, the adjustment will be started from the first frame position in the subsequent multiframe cycle, and both upstream and downstream devices will employ the new time slot scheme to process services in the first frame in the subsequent multiframe cycle. The adjustment indication signal is given one multiframe cycle in advance to reserve preparation for the time slot adjustment and change. In an application, in order to improve the reliable transmission of the adjustment indication signal C, if an upstream node receives a failure indication signal sent back by a downstream node indicating that there is an error code or failure between the upstream and downstream nodes when the upstream node sends the adjustment indication signal C, the link between the upstream and downstream nodes is unreliable, the upstream node can repeatedly send the adjustment indication signal C until the failure ends, thus avoiding the loss of the adjustment indication signal C caused by the link failure between the upstream and downstream nodes.

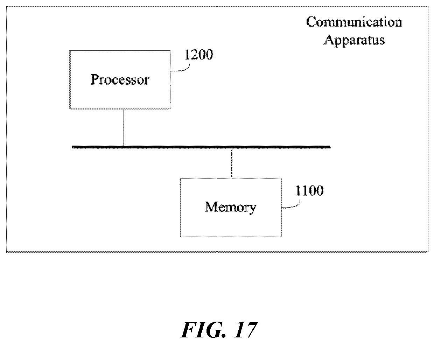

FIG. 17 depicts a schematic diagram showing a communication apparatus according to an embodiment of the present disclosure. As shown in FIG. 17, the communication apparatus includes a memory 1100, and a processor 1200. One or more memories 1100 and/or one or more processors 1200 may be provided, while FIG. 17 shows one memory 1100, and one processor 1200 by way of an example. The memory 1100, and the processor 1200 in the apparatus may connected via a bus as shown by way of an example in FIG. 17, or the like.

As a computer-readable storage medium, the memory 1100 can be configured to store software programs, computer-executable programs and modules, such as program instructions/modules corresponding to the method described in any one of the embodiments of the present disclosure. The processor 1200 carries out the method described in any one of the embodiments of the present disclosure by execution of the software programs, instructions and modules stored in the memory 1100.

The memory 1100 may include a program storage section and a data storage section, in which the program storage section may store an operating system and application programs for performing at least one operation, and data storage section may store program of the method as described in any one of the embodiments above. In addition, the memory 1100 can include a high-speed random access memory and a nonvolatile memory, such as at least one disk memory device, a flash memory device, or other nonvolatile solid-state memory devices. In some implementations, the memory 1100 may include memories remotely located relative to the processor 1200, and these remote memories may be connected to the apparatus through a network. Examples of the above networks include, but are not limited to, the Internet, intranet, local area network, mobile communication network, and combinations thereof.

According to an embodiment of the present disclosure, a computer-readable storage medium is provided. The computer-readable storage medium stores a computer-executable instruction which, when executed by a processor causes the processor to carry out the method as described in any one of the embodiments above.

According to an embodiment of the present disclosure, a computer program product is provided. The computer program product includes a computer program, or a computer instruction stored in a computer-readable storage medium which, when executed by a processor of a computer device, causes the computer device to carry out any one of the methods as described above.

According to the method for time slot adjustment described in the embodiments of the present disclosure, the source node sends time slot adjustment policy information to the destination node via a downstream node, such that the downstream node and the destination node determine the respective time slot adjustment policy according to the time slot adjustment policy information. After receiving the time slot adjustment policy acknowledgement information returned by the destination node via the downstream node, the source node sends the time slot adjustment indication information to the destination node via the downstream node, such that each of the downstream node and the destination node adopts the respective time slot adjustment policy to complete the time slot adjustment according to the time slot adjustment indication information. As such, after the end to end handshake and negotiation of all nodes on the time slot adjustment is successful, the time slot adjustment is performed sequentially starting from the source node, which can not only reduce the negotiation time, but also avoid the fallback requirement caused by the negotiation failure in the hop-by-hop adjustment scheme, thereby improving the time slot negotiation efficiency and the time slot adjustment success rate.

The system architecture and application scenarios described in an embodiment of the present disclosure are intended for better understanding of rather than limitations to the technical scheme of various embodiments of the present disclosure. It is known to those having ordinary skills in the art that, with the evolution of the system architecture and the emergence of new application scenarios, the technical scheme provided by the embodiment of the present disclosure is also applicable to similar technical problems.

It shall be appreciated by a person having ordinary skills in the art that all or some of the steps, functional modules/units in the methods, systems and devices disclosed above can be implemented as software, firmware, hardware and their appropriate combinations.

In the hardware implementation, the division between functional modules/ units mentioned in the above description does not necessarily correspond to the division of physical components. For example, a physical component may have multiple functions, or a function or step may be performed by several physical components in cooperation. Some or all physical components can be implemented as software executed by a processor, such as a central processing unit, a digital signal processor or a microprocessor, or as hardware, or as an integrated circuit, such as an application specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer readable instructions, data structures, program modules or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be configured to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

The terms "component", "module" and "system" used in this description are intended to refer to computer-related entities, hardware, firmware, a combination of hardware and software, software, or software in execution. For example, a component can be, but is not limited to, a process running by a processor, a processor, an object, an executable file, a thread of execution, a program, or a computer. By way of illustration, both an application running on a computing device and the computing device can be components. One or more components can reside in a process or thread of execution, and components can be located on one computer or distributed between two or more computers. In addition, these components can be executed from various computer-readable media having various data structures stored thereon. Components can communicate through local or remote processes, for example, according to signals with one or more data packets (for example, data from two components interacting with another component between a local system, a distributed system or a network, for example, the Internet interacting with other systems through signals).

## Claims

1. A method for time slot adjustment, comprising:
sending time slot adjustment policy information to a destination node through a downstream node, to allow each of the downstream node and the destination node to determine respective time slot adjustment policy according to the time slot adjustment policy information; and
sending time slot adjustment indication information to the destination node through the downstream node, in response to receiving time slot adjustment policy acknowledgment information returned by the destination node through the downstream node, and completing the time slot adjustment by adopting the respective time slot adjustment policy.

2. The method according to claim 1, wherein: the time slot adjustment policy information comprises time slot adjustment application information and information about adjustment; the time slot adjustment application information is intended to request time slot adjustment; and the information about adjustment is intended to determine a policy content of the time slot adjustment policy.

3. The method according to claim 2, wherein: the time slot adjustment policy acknowledgment information is sent by the destination node after the destination node receives the time slot adjustment application information.

4. The method according to claim 1, wherein: the time slot adjustment indication information is intended to instruct each of the downstream node and the destination node to perform and complete the time slot adjustment by means of the respective time slot adjustment policy.

5. The method according to claim 2, wherein: the information about adjustment is determined according to a time slot adjustment capability supported by a node sending the information about adjustment.

6. The method according to claim 2, wherein: the time slot adjustment policy acknowledgment information comprises time slot adjustment acknowledgment information and adjustment information for confirmation; the time slot adjustment acknowledgment information corresponds to the time slot adjustment application information; and the information about adjustment transmitted between two adjacent nodes matches the adjustment information for confirmation transmitted between the two adjacent nodes.

7. The method according to claim 6, wherein: completing the time slot adjustment by adopting the respective time slot adjustment policy, comprises:
adopting the respective time slot adjustment policy to send or receive a service packet, in response to determining that the received adjustment information for confirmation matches the sent information about adjustment.

8. The method according to claim 1, wherein: sending the time slot adjustment policy information to the destination node through the downstream node, comprises:
repeatedly sending, by the source node, time slot adjustment policy information to the destination node through the downstream node until the source node receives the time slot adjustment policy acknowledgment information returned by the destination node through the downstream node;
or,
repeatedly sending the time slot adjustment policy information to the destination node through the downstream node within a first preset time period, and stopping sending the time slot adjustment policy information in response to a failure in receiving time slot adjustment policy acknowledgment information returned by the destination node through the downstream node within the first preset time period.

9. The method according to claim 2, wherein: the time slot adjustment policy information further comprises a service serial number, and the time slot adjustment policy acknowledgment information comprises a service serial number for confirmation corresponding to the service serial number.

10. The method according to claim 2, wherein: the information about adjustment comprises a time slot serial number related to adjustment, or a policy serial number related to adjustment.

11. The method according to claim 10, wherein: the information about adjustment comprises the policy serial number related to adjustment; and before sending the time slot adjustment policy information to the destination node through the downstream node in response to the inclusion of the policy serial number related to adjustment within the information about adjustment, the method further comprises:
sending, by the source node, an adjustment policy packet carrying the policy serial number related to adjustment and the policy information about the adjustment corresponding to the policy serial number related to adjustment to the destination node through the downstream node, such that each of the downstream node and the destination node stores the policy serial number related to adjustment and the policy information about adjustment; wherein the policy information about adjustment comprises each time slot serial number, services serial number, and the adjustment type that are associated with the adjustment.

12. The method according to claim 11, wherein: the adjustment policy packet comprises a packet type identifier field, a first packet field, a second packet field and a third packet field; and in response to the packet type identifier field taking a first preset value, the first packet field is configured to be populated with a service serial number, the second packet field is configured to be populated with each time slot serial number related to adjustment, and the third packet field is configured to be populated with the policy serial number related to adjustment.

13. The method according to claim 12, wherein: in response to the packet type identifier field taking a second preset value, the adjustment policy packet is intended to carry the time slot adjustment policy information; the adjustment policy packet comprises a fourth packet field intended to be populated with the information about adjustment; and the fourth packet field comprises the first packet field, the second packet field, and the third packet field.

14. The method according to claim 11, wherein: the adjustment policy packet is in form of Ethernet packet format, or Link Layer Discovery Protocol packet format.

15. The method according to claim 11, wherein: sending the adjustment policy packet carrying the policy serial number related to adjustment and the policy information about the adjustment corresponding to the policy serial number related to adjustment to the destination node through the downstream node, comprises:
sending the adjustment policy packet carrying the policy serial number related to adjustment and the policy information about the adjustment corresponding to the policy serial number related to adjustment to the destination node through the downstream node over a network pipeline channel, a common service channel, or a general communication channel in a carrier frame.

16. The method according to claim 10, wherein: in response to an inclusion of a policy serial number related to adjustment within the information about adjustment, the time slot adjustment policy comprises the policy serial number related to adjustment and the policy information about adjustment corresponding to policy serial number related to adjustment; and the time slot adjustment policy is issued by a network management system.

17. The method according to claim 10, wherein: in response to an inclusion of a policy serial number related to adjustment within the information about adjustment , the time slot adjustment indication information comprises, a time slot adjustment indication signal and a policy serial number related to adjustment; wherein the policy serial number related to adjustment in the time slot adjustment indication information is indicative of a time slot adjustment policy to be activated, and the time slot adjustment indication signal is indicative of an activation of the time slot adjustment policy to be activated;
or,
in response to an inclusion of the policy serial number related to adjustment within the information about adjustment, the time slot adjustment indication information comprises, a time slot adjustment indication signal indicative activating the time slot adjustment policy determined in a previous negotiation of time slot adjustment.

18. The method according to claim 10, wherein: in response to an inclusion of a policy serial number related to adjustment within the information about adjustment, the time slot adjustment policy information is carried in a first time slot adjustment packet; wherein, the first time slot adjustment packet comprises a fifth packet field intended to be populated with the time slot adjustment application information, a sixth packet field intended to be populated with the policy serial number related to adjustment, and a seventh packet field intended to be populated with the time slot adjustment policy acknowledgment information; the time slot adjustment application information in the fifth packet field is set to be valid, and the time slot adjustment policy acknowledgment information in the seventh packet field is set to be invalid;
or,
in response to an inclusion of the policy serial number related to adjustment within the information about adjustment, the time slot adjustment policy acknowledgment information is carried in a second time slot adjustment packet; wherein the second time slot adjustment packet comprises a fifth packet field intended to be populated with the time slot adjustment application information, a sixth packet field intended to be populated with the policy serial number related to adjustment, and a seventh packet field intended to be populated with the time slot adjustment policy acknowledgment information; wherein the time slot adjustment application information in the fifth packet field is set to be invalid, and the time slot adjustment policy acknowledgment information in the seventh packet field is set to be valid.

19. The method according to claim 1, wherein: sending the time slot adjustment indication information to the destination node through the downstream node, comprises:
sending, by the source node, the slot adjustment indication information to the destination node through the downstream node by means of a plurality of carrier frames in a multiframe;
or,
repeatedly sending, by the source node, slot adjustment indication information to the destination node through the downstream node in response to receiving a failure indication signal, until the failure indication signal is no longer received;
or,
sending, by the source node, the slot adjustment indication information to the destination node through the downstream node; and repeatedly sending, by the source node, the slot adjustment indication information, in response to failing to receive an adjustment success indication information from the destination node within a second preset time period, until the source node receives the adjustment success indication information from the destination node within the second preset time period;
or,
repeatedly sending the time slot adjustment indication information to the destination node through the downstream node until receiving the adjustment success indication information from the destination node.

20. A method for time slot adjustment, comprising:
receiving time slot adjustment policy information sent by an upstream node;
determining a corresponding time slot adjustment policy according to the time slot adjustment policy information;
sending the time slot adjustment policy information to a downstream node, to instruct the downstream node to determine a respective time slot adjustment policy according to the time slot adjustment policy information;
forwarding time slot adjustment policy acknowledgment information to the upstream node, in response to receiving the time slot adjustment policy acknowledgment information returned by the downstream node; and
forwarding time slot adjustment indication information to the downstream node, in response to receiving the time slot adjustment indication information sent by the upstream node, and completing the time slot adjustment by adopting the respective time slot adjustment policy.

21. The method according to claim 20, wherein: the time slot adjustment policy information comprises time slot adjustment application information and information about adjustment; the time slot adjustment application information is intended to request time slot adjustment; and the information about adjustment is intended to determine a policy content of the time slot adjustment policy.

22. The method according to claim 21, wherein: the time slot adjustment policy acknowledgment information is sent by the destination node after the destination node receives the time slot adjustment application information;
or,
the time slot adjustment indication information is sent by the source node after receiving the time slot adjustment policy acknowledgment information;
or,
the time slot adjustment indication information is intended to instruct the downstream node to complete the time slot adjustment by adopting the respective time slot adjustment policy;
or,
the information about adjustment is determined according to a time slot adjustment capability supported by a node sending the information about adjustment;
or,
the time slot adjustment policy acknowledgment information comprises time slot adjustment acknowledgment information and adjustment information for confirmation; the time slot adjustment acknowledgment information corresponds to the time slot adjustment application information; and the information about adjustment transmitted between two adjacent nodes matches the adjustment information for confirmation transmitted between the two adjacent nodes.

23. The method according to claim 20, wherein: sending the time slot adjustment policy information to the downstream node, comprises:
repeatedly sending the time slot adjustment policy information to the downstream node until receiving the time slot adjustment policy acknowledgment information returned by the downstream node;
or,
repeatedly sending the time slot adjustment policy information to the downstream node within a first preset time period, and stopping sending the time slot adjustment policy information in response to failing to receive the time slot adjustment policy acknowledgment information returned by the downstream node within the first preset time period.

24. The method according to claim 21, wherein: the information about adjustment comprises a time slot serial number related to adjustment, or a policy serial number related to adjustment.

25. The method according to claim 24, wherein: in response to an inclusion of a policy serial number related to adjustment within the information about adjustment, before receiving the time slot adjustment policy information sent by the upstream node, the method further comprises:
receiving an adjustment policy packet carrying the policy serial number related to adjustment and policy information about adjustment corresponding to the policy serial number related to adjustment, sent by the upstream node;
storing the policy serial number related to adjustment and the policy information about adjustment; and
forwarding the adjustment policy packet to the downstream node, such that the downstream node stores the policy serial number related to adjustment and the policy information about adjustment;
wherein, the policy information about adjustment comprises each time slot serial number, each service serial number and adjustment type about the adjustment.

26. The method according to claim 25, wherein: the adjustment policy packet comprises a packet type identifier field, a first packet field, a second packet field and a third packet field; and in response to the packet type identifier field taking a first preset value, the first packet field is configured to be populated with a service serial number, the second packet field is configured to be populated with each the time slot serial number related to adjustment, and the third packet field is configured to be populated with the policy serial number related to adjustment.

27. The method according to claim 26, wherein: in response to the packet type identifier field taking a second preset value, the adjustment policy packet is intended to carry the time slot adjustment policy information; the adjustment policy packet comprises a fourth packet field intended to be populated with the information about adjustment; and the fourth packet field comprises the first packet field, the second packet field, and the third packet field.

28. The method according to claim 25, wherein: the adjustment policy packet is in form of Ethernet packet format, or Link Layer Discovery Protocol packet format.

29. The method according to claim 25, wherein: forwarding the adjustment policy packet to the downstream node, comprises:
forwarding the adjustment policy packet to the downstream node by means of a network pipeline channel, a common service channel or a general communication channel in a carrier frame.

30. The method according to claim 24, wherein: in response to an inclusion of a policy serial number related to adjustment within the information about adjustment, the time slot adjustment policy comprises the policy serial number related to adjustment and the policy information about adjustment corresponding to the policy serial number related to adjustment; and the time slot adjustment policy is issued by a network management system;
or,
in response to determining that the information about adjustment comprises a policy serial number related to adjustment, the time slot adjustment indication information comprises a time slot adjustment indication signal and a policy serial number related to adjustment; wherein the policy serial number related to adjustment in the time slot adjustment indication information is intended to determine a time slot adjustment policy to be activated, and the time slot adjustment indication signal is indicative of an activation of the time slot adjustment policy to be activated;
or,
in response to determining that the information about adjustment comprises the policy serial number related to adjustment, the time slot adjustment indication information comprises a time slot adjustment indication signal indicative enabling the time slot adjustment policy determined in a previous negotiation of time slot adjustment;
or,
in response to an inclusion of the policy serial number related to adjustment within the information about adjustment, the time slot adjustment policy information is carried in a first time slot adjustment packet; wherein, the first time slot adjustment packet comprises a fifth packet field intended to be populated with the time slot adjustment application information, a sixth packet field intended to be populated with the policy serial number related to adjustment, and a seventh packet field intended to be populated with the time slot adjustment policy acknowledgment information; wherein the time slot adjustment application information in the fifth packet field is set to be valid, and the time slot adjustment policy acknowledgment information in the seventh packet field is set to be invalid;
or,
in response to an inclusion of the policy serial number related to adjustment within the information about adjustment, the time slot adjustment policy acknowledgment information is carried in a second time slot adjustment packet; wherein the second time slot adjustment packet comprises a fifth packet field intended to be populated with the time slot adjustment application information, a sixth packet field intended to be populated with the policy serial number related to adjustment, and a seventh packet field intended to be populated with the time slot adjustment policy acknowledgment information; wherein the time slot adjustment application information in the fifth packet field is set to be invalid, and the time slot adjustment policy acknowledgment information in the seventh packet field is set to be valid.

31. The method according to claim 20, wherein: forwarding the time slot adjustment indication information to the downstream node, comprises:
forwarding the time slot adjustment indication information to the downstream node by means of a plurality of carrier frames in a multiframe;
or,
repeatedly forwarding the time slot adjustment indication information to the downstream node, in response to receiving a failure indication signal, until the failure indication signal is no longer received;
or,
forwarding the slot adjustment indication information to the downstream node; and repeatedly sending the slot adjustment indication information, in response to failing to receive an adjustment success indication information from the destination node within a second preset time period, until the adjustment success indication information from the destination node within the second preset time period is received;
or,
repeatedly forwarding the time slot adjustment indication information to the downstream node, until receiving adjustment success indication information from the destination node.

32. A method for time slot adjustment, comprising:
receiving time slot adjustment policy information sent by a source node through an upstream node;
determining a corresponding time slot adjustment policy according to the time slot adjustment policy information;
sending time slot adjustment policy acknowledgment information to the source node through the upstream node according to the time slot adjustment policy information; and
completing the time slot adjustment by adopting the respective time slot adjustment policy, in response to receiving time slot adjustment indication information sent by the source node through the upstream node.

33. The method according to claim 32, wherein: the time slot adjustment policy information comprises time slot adjustment application information and information about adjustment; the time slot adjustment application information is intended to request time slot adjustment; and the information about adjustment is intended to determine a policy content of the time slot adjustment policy.

34. The method according to claim 33, wherein: the time slot adjustment indication information is sent by the source node after receiving the time slot adjustment policy acknowledgment information;
or,
the information about adjustment is determined according to a time slot adjustment capability supported by a node sending the information about adjustment;
or,
the time slot adjustment policy acknowledgment information comprises time slot adjustment acknowledgment information and adjustment information for confirmation; the time slot adjustment acknowledgment information corresponds to the time slot adjustment application information; and the information about adjustment transmitted between two adjacent nodes matches the adjustment information for confirmation transmitted between the two adjacent nodes.

35. The method according to claim 33, wherein: the information about adjustment comprises a time slot serial number related to adjustment, or a policy serial number related to adjustment.

36. The method according to claim 35, wherein: in response to an inclusion of a policy serial number related to adjustment within the information about adjustment, before receiving the time slot adjustment policy information sent by the source node through the upstream node, the method further comprises:
receiving an adjustment policy packet carrying the policy serial number related to adjustment and policy information about adjustment corresponding to the policy serial number related to adjustment, sent by source node through the upstream node;
storing the policy serial number related to adjustment and the policy information about adjustment; wherein, the policy information about adjustment comprises each time slot serial number, each service serial number and adjustment type about the adjustment.

37. The method according to claim 36, wherein: the adjustment policy packet comprises a packet type identifier field, a first packet field, a second packet field and a third packet field; and in response to determining that the packet type identifier field is valued as a first preset value, the first packet field is configured to be populated with a service serial number, the second packet field is configured to be populated with each time slot serial number for adjustment, and the third packet field is configured to be populated with the policy serial number related to adjustment.

38. The method according to claim 37, wherein: in response to the packet type identifier field taking a second preset value, the adjustment policy packet is intended to carry the time slot adjustment policy information; the adjustment policy packet comprises a fourth packet field intended to be populated with the information about adjustment; and the fourth packet field comprises the first packet field, the second packet field, and the third packet field.

39. The method according to claim 36, wherein: the adjustment policy packet is in form of Ethernet packet format, or Link Layer Discovery Protocol packet format.

40. The method according to claim 35, wherein: in response to an inclusion of a policy serial number related to adjustment within the information about adjustment, the time slot adjustment policy comprises the policy serial number related to adjustment and the policy information about adjustment corresponding to the policy serial number related to adjustment; and the time slot adjustment policy is issued by a network management system;
or,
in response to determining that the information about adjustment comprises a policy serial number related to adjustment, the time slot adjustment indication information comprises a time slot adjustment indication signal and a policy serial number related to adjustment; wherein the policy serial number related to adjustment in the time slot adjustment indication information is intended to determine a time slot adjustment policy to be activated, and the time slot adjustment indication signal is indicative of an activation of the time slot adjustment policy to be activated;
or,
in response to determining that the information about adjustment comprises the policy serial number related to adjustment, comprises within the time slot adjustment indication information, a time slot adjustment indication signal indicative enabling the time slot adjustment policy determined in a previous negotiation of time slot adjustment;
or,
in response to an inclusion of the policy serial number related to adjustment within the information about adjustment, the time slot adjustment policy information is carried in a first time slot adjustment packet; wherein, the first time slot adjustment packet comprises a fifth packet field intended to be populated with the time slot adjustment application information, a sixth packet field intended to be populated with the policy serial number related to adjustment, and a seventh packet field intended to be populated with the time slot adjustment policy acknowledgment information; the time slot adjustment application information in the fifth packet field is set to be valid, and the time slot adjustment policy acknowledgment information in the seventh packet field is set to be invalid;
or,
in response to an inclusion of the policy serial number related to adjustment within the information about adjustment, the time slot adjustment policy acknowledgment information is carried in a second time slot adjustment packet; wherein the second time slot adjustment packet comprises a fifth packet field intended to be populated with the time slot adjustment application information, a sixth packet field intended to be populated with the policy serial number related to adjustment, and a seventh packet field intended to be populated with the time slot adjustment policy acknowledgment information; wherein the time slot adjustment application information in the fifth packet field is set to be invalid, and the time slot adjustment policy acknowledgment information in the seventh packet field is set to be valid.

41. The method according to claim 32, wherein: before completing the time slot adjustment by adopting the respective time slot adjustment policy, the method further comprises:
sending adjustment success indication information to the source node or a network management system, wherein the adjustment success indication information is indicative of a completion of the time slot adjustment according to the time slot adjustment indication information.

42. A communication apparatus, comprising:
at least one processor; and
at least one memory configured to store at least one program which,
when executed by the at least one processor, causes the at least one processor to carry out the method as claimed in any one of claims 1 to 41.

43. A computer readable storage medium storing a computer program which, when executed by a processor, causes the processor to carry out the method as claimed in any one of claims 1 to 41.
